# EUROPÄISCHE PATENTSCHRIFT

(11) **EP 3 950 276 B1**
(45) Veröffentlichungstag und Bekanntmachung des Hinweises auf die Patenterteilung: **20.12.2023**
(21) Anmeldenummer: 21189462.1
(22) Anmeldetag: 03.08.2021
(51) Int. Cl.: B22F 10/28, B22F 10/68

(54) **TRICHTERFÖRMIGE FÖRDERVORRICHTUNG SOWIE EIN FÖRDER-TRENN-VERFAHREN FÜR EINE BAUTEIL-PARTIKELMATERIAL-MISCHUNG**
FUNNEL-SHAPED CONVEYOR DEVICE AND A CONVEYOR-SEPARATING METHOD FOR A COMPONENT PARTICLE MATERIAL MIXTURE
DISPOSITIF DE TRANSPORT EN FORME D'ENTONNOIR, AINSI PROCÉDÉ DE TRANSPORT SÉPARÉ POUR UN MÉLANGE DE COMPOSANT ET DE MATIÈRE PARTICULAIRE

(30) Priorität: 06.08.2020 DE 102020120779
(43) Veröffentlichungstag der Anmeldung: 09.02.2022
(73) Patentinhaber: OSSBERGER GmbH + Co KG, 91781 Weißenburg (DE)
(72) Erfinder: GARSCHA, Markus, 91792 Ellingen (DE); OSSBERGER, Karl-Friedrich, 91781 Weißenburg (DE)
(74) Vertreter: HWP Intellectual Property

(56) Entgegenhaltungen:
- CN-U- 208 855 063
- US-A1- 2015 266 157
- US-A1- 2016 193 696
- US-A1- 2018 194 065
- US-A1- 2019 193 157

## Beschreibung

### 1. Gebiet der Erfindung

Die vorliegende Erfindung betrifft eine trichterförmige Fördervorrichtung, mit der Bauteile und loses Partikelmaterial einer Bauteil-Partikelmaterial-Mischung eines additiven Herstellungsverfahrens förderbar und trennbar sind. Des Weiteren betrifft vorliegende Erfindung ein Förder-Trenn-Verfahren für eine Bauteil-Partikelmaterial-Mischung eines additiven Herstellungsverfahrens, insbesondere in Kombination mit der oben genannten trichterförmigen Fördervorrichtung, mit dem Bauteile und loses Partikelmaterial der Bauteil-Partikelmaterial-Mischung förderbar und zumindest teilweise voneinander trennbar sind.

### 2. Hintergrund der Erfindung

Im Vergleich zu klassischen Herstellungsverfahren für Kunststoffartikel, wie beispielsweise der Spritzguss, gewinnen additive Herstellungsverfahren mit Kunststoffpulvern zunehmend an Bedeutung. Während das selektive Lasersintern (SLS) und das Multijet Fusion (MJF) Kunststoffobjekte aus einem Kunststoffpulver erzeugen, verflüssigen andere Verfahren das zugeführte Kunststoffpulver oder Kunststoffgranulat zunächst, um nachfolgend die Kunststoffobjekte aus Kunststofftropfen oder Kunststofffäden schrittweise aufzubauen. Zu den letztgenannten Verfahren zählt beispielsweise das Fused Deposition Modeling (FDM), das ARBURG Plastic Freeforming (APF) sowie die additive Fertigung per Material Jetting (MJ).

In den zuerst genannten Verfahren werden die Kunststoffbauteile oder allgemein Bauteile in einem Pulverbett erzeugt. Dieses Pulverbett besteht zunächst aus der Partikelmaterial-Mischung, in der die Partikelmaterial-Mischung als loses Pulver vorliegt. Durch die Wirkung der zugeführten Laserenergie beim selektiven Lasersintern (SLS) werden gezielt bestimmte Mengen der Partikelmaterial-Mischung zu einem Bauteil verfestigt. Angrenzend an diese Bauteile haftet noch Partikelmaterial-Mischung als relativ loses Pulver an den Bauteilen an, welches in Nachbearbeitungsprozessen von dem Bauteil gelöst werden muss. Zudem befinden sich die Bauteile weiterhin in einem umgebenden Pulverbett, welches aus der Partikelmaterial-Mischung besteht. Die Gesamtheit aus loser Partikelmaterial-Mischung und Bauteilen wird auch als Pulverkuchen oder allgemein als Pulverbett mit Bauteilen bezeichnet.

Nach Abschluss eines derartigen additiven Herstellungsverfahrens ist es erforderlich, die Bauteile im Pulverbett von dem anhaftenden Pulver in Form der Partikelmaterial-Mischung zu trennen. Dieses Trennen dient dazu, einerseits die Nachbearbeitung der Bauteile zu beginnen und andererseits loses Pulver für die weitere Verarbeitung zurückzugewinnen.

Das Trennen von Bauteilen und Pulvern ausgehend von einem Pulverbett bzw. einem Pulverkuchen wird allgemein auch mit den Begriffen "entpacken", "auspacken" oder "entpulvern" beschrieben. Im Stand der Technik werden zu diesem Zweck unterschiedliche Vorgehensweisen und Vorrichtungen vorgeschlagen. WO 2019/140468 und WO 2014/009376 nutzen beispielsweise eine Wirbelschicht zum Entpacken der im 3D-Druck hergestellten Bauteile. Während sich die hergestellten Bauteile und das nicht verfestigte Pulver auf einer Trägeroberfläche mit Durchgangsöffnungen befinden, wird mit einer erzeugten Wirbelschicht das unverfestigte Restpulver von den hergestellten Bauteilen gelöst. Zudem dient die nach bekannten Schritten erzeugte Wirbelschicht dazu, das Restpulver durch die Durchgangsöffnungen der Trägeroberfläche abzuführen und zurückzugewinnen. Eine derartige Wirbelschicht zu erzeugen, erfordert aufwändige und vor allem geschlossene Bearbeitungsräume, in denen sich das Pulverbett mit den Bauteilen befindet. Zudem ist der nötige Energieeintrag in das Pulverbett relativ groß, um eine effektive Wirbelschicht zum Lösen von Restpulver von den Bauteilen und zum nachfolgenden Abführen des Restpulvers zu erzeugen.

In DE 10 2013 215 748 wird zur Vermeidung der Pulverbelastung am Herstellungsort eines Bauteils im 3D-Druck permanent überschüssiges Pulver über eine Absaugglocke und eine daran angeschlossene Absauganlage abgesaugt. Zur Rückgewinnung des Pulvers wird dieses durch ein Sieb geleitet, um es nachfolgend der Herstellung erneut zuführen zu können. Auch diese Lösung ist energetisch aufwendig, da die Absaugleitung jeweils an die Geometrie der erzeugten Bauteile angepasst werden muss und relativ hoch liegen kann.

In ähnlicher Weise beschreibt EP 3 611 009 eine Absauganlage, um beim Entpacken hergestellter 3D-Objekte aus dem Pulverbett die stattfindende Staubentwicklung zu reduzieren. Entsprechend ist oberhalb des Pulverbetts eine Absaugeinrichtung angeordnet, die vorhandene Pulverreste in der Herstellungsumgebung absaugt.

Neben dem Absaugen von Pulverresten in der Atmosphäre oder Pulverresten bei der Herstellung werden unterschiedliche mechanische Verfahren zum Reinigen von Bauteilen nach Abschluss des 3D-Drucks beschrieben. Gemäß EP 1 192 040 befindet sich das Pulverbett bestehend aus Bauteilen und losem Pulver auf einer Trägeroberfläche. Diese Trägeroberfläche ist vertikal verschiebbar. Während also der Träger mit seiner Trägeroberfläche schrittweise nach oben versetzt wird, werden gemäß unterschiedlichen Vorgehensweisen an der Oberfläche des Pulverbetts lose Pulverreste von den hergestellten Bauteilen abgeblasen oder abgesaugt. Nachfolgend oder alternativ dazu ist es ebenfalls möglich, das Pulverbett bestehend aus hergestellten Bauteilen und nicht verfestigtem Pulver bzw. Partikelmaterial in ein Rüttelsieb zu bewegen bzw. zu schütten. Das Rüttelsieb besteht aus einem Sieb einer Maschengröße, so dass die hergestellten Bauteile nicht hindurch fallen können. Durch die rüttelnde Bewegung des Rüttelsiebs werden lose Pulverreste von den Bauteilen getrennt und zudem die Bauteile von noch locker anhaftenden Pulverresten befreit. Die auf diese Weise getrennten Bauteile sind in der weiteren Nachbearbeitung zuführbar, während das aufgefangene lose Partikelmaterial der Herstellung weiterer Bauteile erneut zuführbar ist.

In DE 20 2019 003 691 und EP 3 533 538 werden Bauteile mit noch anhaftenden Pulverresten in einem Behälter oder einzeln eingespannt gezielt verschwenkt, um Pulverreste von den hergestellten Bauteilen zu lösen. Durch die Wirkung der Schwerkraft fallen die gelösten Pulverreste auf ein Sieb, um sie aus einem Behälter abzuführen und der Rückgewinnung des Pulvers zuzuleiten.

US 2018/0194065 A1beschreibt eine Vorrichtung zum Entfernen eines Werkstoffpulvers von wenigstens einem unter Verwendung des Werkstoffpulvers generativ gefertigten Formkörper. Die Vorrichtung umfasst: wenigstens einen Behälter zur Aufnahme des in das Werkstoffpulver eingebetteten Formkörpers, wobei der Behälter eine höhenverstellbare Bauplattform aufweist; wenigstens ein geneigt angeordnetes Rüttelsieb mit einem Aufgabeende und einem geodätisch tiefer als das Aufgabeende angeordneten Übergabeende; wenigstens eine Kippeinrichtung zum Kippen des Behälters; wenigstens eine sich an das Übergabeende des Rüttelsiebs anschließende Auffangeinheit zum Auffangen des von dem Rüttelsieb abgleitenden Formkörpers; ein luftdicht verschließbares, zumindest teilweise transparent ausgebildetes Gehäuse, in das der Behälter einbringbar ist und in dem das Rüttelsieb und die Kippeinrichtung angeordnet sind und in dem die Auffangeinheit zumindest teilweise angeordnet ist; und wenigstens eine an dem Gehäuse ausgebildete, mit einem Handschuh luftdicht verschlossene Öffnung, wobei die Öffnung und der Handschuh derart ausgebildet und angeordnet sind, dass eine Person über den Handschuh den von der Auffangeinheit aufgefangenen Formkörper ergreifen kann.

US 2015/266157 A1 beschreibt eine Fördervorrichtung, mit der Bauteile und loses Partikelmaterial einer Bauteil-Partikelmaterial-Mischung eines additiven Herstellungsverfahrens entstapelbar, förderbar und trennbar sind.

Trotz der Vielzahl der bekannten Methoden zum Entpacken von Bauteilen aus einem Pulverbett ist es Aufgabe vorliegender Erfindung, alternative Vorgehensweisen und Vorrichtungen vorzuschlagen, um ein Pulverbett mit hergestellten Bauteilen zu bewegen sowie die Bauteile von losem Pulver und noch anhaftenden Pulverresten zu trennen.

### 3, Zusammenfassung der Erfindung

Die obige Aufgabe wird durch eine trichterförmige Fördervorrichtung gemäß dem unabhängigen Patentanspruch 1, durch ein Förder-Trenn-Verfahren für eine Bauteil-Partikelmaterial-Mischung eines additiven Herstellungsverfahrens gemäß dem unabhängigen Patentanspruch 7 sowie durch ein Entpackungs-Kreislauf-System zum Entpacken und Entstapeln von Bauteilen eines Pulverkuchen gemäß Patentanspruch 14 gelöst. Vorteilhafte Ausgestaltungen sowie Weiterentwicklungen vorliegender Erfindung gehen aus der folgenden Beschreibung, den begleitenden Zeichnungen und den anhängenden Patentansprüchen hervor.

Mit der erfindungsgemäßen trichterförmigen Fördervorrichtung sind Bauteile und loses Partikelmaterial einer Bauteil-Partikelmaterial-Mischung eines additiven Herstellungsverfahrens entstapelbar, förderbar und trennbar. Die Fördervorrichtung weist die folgenden Merkmale auf: eine siebartige Förderfläche, die sich in der Fördervorrichtung zwischen einem Fördereinlass und einem Förderauslass der Fördervorrichtung erstreckt und angepasst ist, um schwingungsgetrieben die Bauteil-Partikelmaterial-Mischung zu transportieren und in Bauteile und loses Partikelmaterial zu trennen, einen Schwingungsantrieb, mit dem die Fördervorrichtung in Schwingungen versetzbar ist, und mindestens einen zwischen dem Fördereinlass und dem Förderauslass und in Schwerkraftrichtung unterhalb der siebartigen Förderfläche angeordneten Trichterauslass sowie mindestens eine in Richtung eines Trichterauslasses geneigte Zufuhrebene, die in Schwerkraftrichtung unterhalb der Förderfläche angeordnet ist, um loses Partikelmaterial dem Trichterauslass zuzuführen.

Die erfindungsgemäße Fördervorrichtung ist angepasst, um bei einem additiven Herstellungsverfahren zur Verarbeitung von Kunststoffpulver zu Bauteilen die hergestellten Bauteile und das am Ende des Herstellungsprozesses vorliegende Pulver zu entpacken. Gemeinsam werden die hergestellten Bauteile und das vorhandene Pulver als Pulverkuchen bezeichnet. Derartige additive Herstellungsverfahren zur Verarbeitung eines Kunststoffpulvers oder Polymerpulvers sind allgemein bekannt, wie beispielsweise das selektive Lasersintern. Am Ende eines solchen Herstellungsprozesses liegen innerhalb des Pulverbetts Bauteile mit an der Bauteiloberfläche anhaftendem relativ losem Partikelmaterial sowie unverfestigtes Pulver bzw. unverfestigtes Partikelmaterial vor. Aus obiger Erläuterung folgt, dass die Begriffe "Partikelmaterial" und "Pulver" im Folgenden synonym verwendet werden. Auch wird im bekannten Stand der Technik unter dem Begriff "Entpacken" allgemein das Trennen von hergestellten Bauteilen und noch nicht verarbeitetem Pulver verstanden. Ein Pulverbett, in welchem die Bauteile beispielsweise durch das selektive Lasersintern durch Verfestigen des Pulvermaterials hergestellt werden, wird am Ende eines derartigen Herstellungsverfahrens häufig auch als "Pulverkuchen" bezeichnet. Ein derartiger Pulverkuchen setzt sich aus hergestellten Bauteilen und nicht verfestigtem Pulver zusammen, während der Begriff "Pulverbett" auch das anfängliche Polymerpulver ohne darin vorhandene verfestigte Bauteile bezeichnen kann.

Die erfindungsgemäß bevorzugte Fördervorrichtung ist darauf gerichtet, einen nach Abschluss des Herstellungsverfahrens, beispielsweise des selektiven Lasersinterns, vorliegenden Pulverkuchen den erforderlichen Nachbearbeitungsschritten zuzuführen. Dieser gezielte Transport des Pulverkuchens wird durch die Konstruktion der erfindungsgemäß bevorzugten Fördervorrichtung gleichzeitig dafür genutzt, die hergestellten Bauteile und das unverfestigte Partikelmaterial bzw. Pulver voneinander zu trennen. Denn während die hergestellten Bauteile unterschiedlichen Nachbearbeitungsschritten unterzogen werden können, wie beispielsweise der Oberflächenbehandlung, muss das unverarbeitete Pulver gesammelt und für eine eventuelle erneute Zufuhr zum additiven Herstellungsprozess vorbereitet werden. Ein derartiges Vorbereiten umfasst das Trennen unterschiedlich verklumpter bzw. verklebter Pulvermengen, das Mischen von zurückgewonnenem Pulver mit noch nicht verarbeitetem Pulver sowie das Gewährleisten der geforderten Korngröße des zu verarbeitenden Polymerpulvers, um eine erwartete Verfestigung bei Energiezufuhr durch den Laser zu erzielen.

Da die Fördervorrichtung vorzugsweise mit Hilfe eines Schwingungsantriebs in Schwingungen versetzt wird, erfolgt der Transport bzw. das Fördern des Pulverkuchens allein durch die Schwingungen oder durch eine kombinierte Wirkung der erzeugten Schwingungen und der vorhandenen Schwerkraft. Die Schwerkraft wirkt sich beispielsweise auf einer geneigten Förderfläche treibend aus. Eine weitere Schwerkraftwirkung ergibt sich aus in die Fördervorrichtung nachgefüllte Mengen des zu fördernden und zu trennenden Pulverbetts. Denn diese nachgefüllten Mengen des Pulverbetts schieben die bereits vorhandenen Pulverbett-Mengen in Förderrichtung weiter, ohne dass dazu eine Neigung der Förderfläche erforderlich ist.

Durch die in den Pulverkuchen eingebrachten Schwingungen mit Hilfe des Schwingungsantriebs wird bevorzugt der Pulverkuchen entstapelt. Das bedeutet, dass eine Packung des Pulverkuchens bestehend aus hergestellten Bauteilen und Pulver auf der Förderfläche in seine Einzelteile aufgebrochen wird. Durch das Entstapeln verteilen sich hergestellte Bauteile und Pulvermengen auf der Förderfläche. Dies erleichtert eine Zufuhr von Schwingungsenergie des Schwingungsantriebs zu den Bauteilen und zum Pulver. Die Zufuhr von Schwingungsenergie ist vorteilhaft, um das Pulver von der siebartige Förderfläche abzuführen und lose anhaftendes Pulver an den Bauteilen von den Bauteilen zu lösen.

Vorzugsweise wird eine Amplitude der Schwingungen des Schwingungsantriebs derart gewählt, dass der Pulverkuchen mit den Schwingungen des Schwingungsantriebs entstapelt werden kann. Da vorzugsweise allein die eingeprägten Schwingungen den Pulverkuchen entstapeln, benötigt die Förderfläche keine Bürsten oder Schikanen oder andere mechanische Hilfseinrichtungen und/oder -kräfte, um den Pulverkuchen zu entstapeln.

Um gleichzeitig mit dem Fördern des Pulverbetts eine Trennung der hergestellten Bauteile von losem Pulver vornehmen zu können, ist in der Fördervorrichtung eine siebartige Förderfläche zwischen dem Fördereinlass und dem Förderauslass der Fördervorrichtung vorgesehen. Siebartig bedeutet in diesem Zusammenhang, dass die Förderfläche nicht geschlossen ausgebildet ist. Vielmehr weist die Förderfläche Öffnungen in Schwerkraftrichtung auf, durch welche unverfestigtes Pulver aus dem Pulverbett fallen kann. Diese siebartigen Durchlässe weisen vorzugsweise eine beliebige Form auf, die klein genug sein muss, so dass die hergestellten Bauteile durch diese Öffnungen nicht hindurchtreten können. Als passende Formen für die Durchgangsöffnungen sind runde Löcher, Langlöcher sowie abgewinkelte Langlöcher bevorzugt.

Da vorzugsweise die Förderfläche mithilfe des Schwingungsantriebs in Schwingungen versetzt wird, bewegen sich die Bauteile und/oder vorhandene Pulverreste bevorzugt in Förderrichtung vom Fördereinlass zum Förderauslass der Fördervorrichtung. Die Schwingungen führen zu Erschütterungen in den vorhandenen Pulverresten, so dass die Pulverreste sukzessive durch die siebartige Förderfläche fallen. Zudem führen die Schwingungen, vorzugsweise nach einem Entfernen von die Bauteile umgebenden und dadurch die Schwingungen dämpfenden Pulverresten, zu einer wiederholten Kollision der Bauteile mit der Förderfläche. Dadurch werden loses Pulver bzw. loses Partikelmaterial von den hergestellten Bauteilen gelöst und durch die siebartige Förderfläche in Schwerkraftrichtung nach unten unterhalb der Förderfläche abgegeben wird. Zudem führen die Schwingungen je nach Bauteilgröße und -konstruktion bevorzugt zu einer Umorientierung der Bauteile auf der siebartigen Förderfläche. Weisen die Bauteile beispielsweise eine schöpfende Konstruktion auf, d.h. es sind Hohlräume zur Aufnahme losen Pulvers im Bauteil vorhanden, dann werden diese Hohlräume lageverändert und Pulver kann aus den Hohlräumen zumindest teilweise entweichen.

Während die hergestellten Bauteile auf der siebartigen Förderfläche verbleiben und in Richtung Förderauslass weiter transportiert werden, wird bevorzugt das durch die Öffnungen der Förderfläche in Schwerkraftrichtung hindurch fallende unverfestigte Pulver mithilfe des mindestens einen Trichterauslasses unterhalb der Förderfläche zur Rückgewinnung des Pulvers ausgeleitet. Ausgeleitet bedeutet in diesem Zusammenhang, dass das rückgewonnene Pulver nach Abschluss des additiven Herstellungsprozesses zunächst unterhalb der Förderfläche und mithilfe des Trichterauslasses gezielt gesammelt wird. Vorzugsweise wird das Sammeln in dem mindestens einen Trichterauslass durch einen wirkenden Unterdruck im Vergleich zum Umgebungsdruck unterstützt. Der Trichterauslass mündet in eine entsprechende Pulverleitung, um das aufgenommene Pulver beispielsweise an einen Pulvertank oder entsprechenden Behälter abzuführen. Die Abfuhr des Pulvers wird bevorzugt durch die Nutzung eines Zyklonabscheiders unterstützt

Zur Unterstützung des Ableitens des unverfestigten Pulvers unterstützt eine in Richtung des Trichterauslasses geneigte Zufuhrebene die Bewegung des aus dem Pulverkuchen gelösten Pulvers in Richtung Trichterauslass. Denn die Neigung der Zufuhrebene dient der Erzeugung eines gerichteten Pulverstroms zum mindestens einen Trichterauslass. Vorzugsweise wird die Neigung der Zufuhrebene in Kombination mit den Schwingungen des Schwingungsantriebs genutzt. Es hat sich als vorteilhaft gezeigt, mit abnehmendem Neigungswinkel der Zufuhrebene und der Förderebene, die auf die Zufuhrebene oder die Förderfläche übertragene Schwingungsenergie zu erhöhen.

Gemäß einer bevorzugten Ausgestaltung der Fördervorrichtung ist der Aufnahmeraum der Fördervorrichtung bezogen auf die Schwerkraftrichtung oberhalb der Förderfläche mit einer Haube abgedeckt bzw. annähernd verschlossen. Die Haube wird vorzugsweise durch einen Trichteranordnung zum Einfüllen des Pulverkuchens ergänzt, die ebenfalls die Fördervorrichtung verschließt bzw. abdeckt. Die Haube und/oder die Trichteranordnung reduzieren eine Staubabgabe aus der Fördervorrichtung an die Umgebung.

Des weiteren bevorzugt stellt die Haube Verbindungsöffnungen oder -schlitze zur Umgebung bereit. Durch diese Konstruktion wird mit Hilfe eines Unterdrucks in der Fördervorrichtung im Vergleich zum Umgebungsdruck bevorzugt Luft durch die Fördervorrichtung und die Verbindungsöffnungen aus der Umgebung gesaugt. Der Unterdruck reduziert oder vermeidet ebenfalls eine Staubabgabe aus der Fördervorrichtung an die Umgebung.

Gemäß einer bevorzugten Ausgestaltung der erfindungsgemäßen Fördervorrichtung weist mindestens ein Trichterauslass an einer Eingangsöffnung ein Sieb, vorzugsweise ein zylindrisches Rohrsieb auf. Gemäß einer bevorzugten Ausgestaltung des Rohrsiebs weist es mindestens eine durchbrochene Mantelfläche auf, vorzugsweise mit einer definierten Maschengröße. Gemäß einer weiteren bevorzugten Ausgestaltung des Rohrsiebs ist die rohrförmige oder hohlzylindrische Mantelfläche geschlossen, also ohne Maschen, ausgebildet. Innerhalb des Rohrs ist eine Siebfläche angeordnet, die sich über den gesamten Querschnitt des Rohres erstreckt. Vorzugsweise ist die Siebfläche annähernd senkrecht zu einer Längsachse des Rohrs angeordnet. Gemäß einer anderen Ausgestaltung ist die Siebfläche in einem Winkel von 30 bis 75 ° zur Längsachse des Rohrs angeordnet. Diese winklige Anordnung vergrößert bevorzugt die Siebfläche im Vergleiche zu einer senkrechten Orientierung bezogen auf die Längsachse des Rohrsiebs.

Gemäß einer anderen bevorzugten Ausgestaltung ist das Rohrsieb mit einem Drucksensor ausgestattet. Dieser erfasst einen den Pulverstrom durch das Rohrsieb bevorzugt unterstützenden Unterdruck. Sollte der erfasste Unterdruck einen bestimmten Schwellenwert unterschreiten, also sich das Rohrsieb mit Pulver teilweise oder vollständig zusetzen, dann lässt sich über den Drucksensor dieser Zeitpunkt erfassen und der Unterdruck abschalten. Als Konsequenz wird das Pulver vorzugsweise über einen noch freien Auslass abgeführt.

Innerhalb des Pulverkuchens, der nach dem additiven Herstellungsprozess der weiteren Verarbeitung zugeführt werden muss, sind neben den Bauteilen auch Pulverreste unterschiedlicher Art enthalten. Denn während der Herstellung der Bauteile mithilfe des selektiven Lasersinterns wird Wärmeenergie auch an Pulvermengen abgegeben, ohne dass diese zu einem Bauteil verfestigt werden. Nichtsdestotrotz bildet sich durch diese zugeführte Wärmemenge oder andere Energiemengen eine lösbare oder lose Pulververfestigung, die eine weitere Verarbeitung des wiedergewonnenen Pulvers einschränken könnte. In diesem Zusammenhang spricht man auch von Pulvermengen mit einem unterschiedlichen Verklumpungs- oder Anhaftungsgrad. Denn teilweise bereits verfestigtes Pulver ist im Vergleich zu bisher nicht mit Laserenergie beaufschlagtem Polymerpulver weniger geeignet, um im Rahmen eines additiven Herstellungsverfahrens, hier dem selektiven Lasersintern, ein gewünschtes Bauteil zu bilden.

Um auf effektive Weise nicht verklumptes Pulver und verklumptes oder verklebtes Pulver voneinander trennen zu können, wird bevorzugt der mindestens eine Trichterauslass mit einem Rohrsieb ausgestattet. Entsprechend der bevorzugten Maschengröße des Rohrsiebs in seiner Mantelfläche oder allgemein an seiner Siebfläche wird bevorzugt Pulver bis zu einem bestimmten Grad der Verklumpung bzw. des aneinander Anhaftens von Pulverpartikeln durch die Maschengröße bzw. die Maschen des Siebs durchgelassen. Entsprechend werden zu große Pulverpartikel durch das Rohrsieb blockiert und werden bevorzugt über andere Kanäle abgeführt.

Das genannte Rohrsieb hat die Form eines Rohrs bekannter Konstruktion, dessen Mantelfläche oder Siebfläche durch Öffnungen bestimmter Größe durchbrochen ist. Die Größe der Öffnungen wird mithilfe der bekannten Maschengröße angegeben, die sich an der Größe der durchzulassenden Pulverpartikel orientiert.

Gemäß einer weiteren bevorzugten Ausgestaltung der erfindungsgemäßen Fördervorrichtung endet die mindestens eine geneigte Zufuhrebene direkt an dem mindestens einen Trichterauslass oder über einen Abfuhrspalt beabstandet zum Trichterauslass an diesem Trichterauslass.

Erfindungsgemäß bevorzugt ist die trichterförmige Fördervorrichtung in mindestens zwei Förderebenen unterteilt. Während die aus dem Pulverkuchen mithilfe der siebartigen Förderfläche herausgesiebten Bauteile in Richtung Förderauslass bewegt werden, wird auf einer zweiten Förderstufe das von dem Pulverkuchen abgetrennte lose Pulvermaterial bzw. das lose Partikelmaterial mithilfe der geneigten Zufuhrebene in Richtung des mindestens einen Trichterauslasses bewegt. Auch auf der zweiten Förderstufe wird vorzugsweise als treibende Kraft die wirkende Schwerkraft allein oder diese in Kombination mit den in die Fördervorrichtung eingeleiteten Schwingungen verwendet. Neben dem Transport des losen Pulvers in Richtung des mindestens einen Trichterauslasses geht es bei dieser Pulverbewegung aber auch darum, mithilfe eines effektiven Zwischenschritts eine Trennung fein vorliegenden Pulvers von größeren Pulverbrocken oder verklebten Pulverbestandteilen vorzunehmen. Zu diesem Zweck endet vorzugsweise die geneigt angeordnete Zufuhrebene direkt an dem Trichterauslass oder über einen Abfuhrspalt beabstandet zum Trichterauslass. Bei einer direkten Anordnung des Endes der Zufuhrebene an dem Trichterauslass wird das lose Pulver unabhängig von seiner Korngröße oder Verklumpung bis zum Trichterauslass bewegt. Die bevorzugte Maschengröße des Rohrsiebs angeordnet am Eingang des Trichterauslasses entscheidet dann darüber, welcher Pulveranteil welcher Korngröße das Rohrsieb passieren kann und welche Pulvergröße an der Außenseite des Rohrsiebs aufgehalten wird.

Ist gemäß einer anderen bevorzugten Ausgestaltung vorliegender Erfindung die geneigte Zufuhrebene über einen Abfuhrspalt von dem Trichterauslass beabstandet, dann können vorzugsweise größere Pulvermengen über diesen Abfuhrspalt abgeführt werden. Dies ermöglicht bei größeren Mengen an abzutransportierendem Pulver einen schnellen Abtransport, falls beispielsweise durch das Rohrsieb ein Pulverstau am Trichterauslass vorliegen würde. Gemäß einer weiteren bevorzugten Ausgestaltung ist es ebenfalls bevorzugt, dass die geneigte Zufuhrebene teilweise direkt am Trichterauslass endet während ein anderer Teil der Zufuhrebene über den Abfuhrspalt vom Trichterauslass beabstandet ist. In diesem Fall würde über zwei unterschiedliche Abschnitte der Zufuhrebene angrenzend an den Trichterauslass eine schnellere Pulverabfuhr über den Abfuhrspalt erfolgen, während bei direkter Angrenzung der Zufuhrebene an den Trichterauslass das Sieben durch das Rohrsieb unterstützt werden würde.

Gemäß einer weiteren bevorzugten Ausgestaltung umgibt das Rohrsieb umfänglich eine Hülse, die in bevorzugten Umfangsabschnitten bezogen auf die äußere Mantelfläche des Rohrsiebs von der Mantelfläche beabstandet angeordnet ist, um einen Abfuhrspalt zu bilden. Gemäß dieser bevorzugten Ausgestaltung endet die Zufuhrebene direkt an der Außenseite der Hülse des Rohrsiebs und damit am Abfuhrspalt zwischen Rohrsieb und Hülse. Die Hülse ist vorzugsweise so lang, dass sie oberhalb der Zufuhrebene beginnt und unterhalb der Zufuhrebene endet. Dadurch ist gewährleistet, dass Pulver über den Abfuhrspalt am Rohrsieb vorbei zum zweiten Auslass gelangen kann.

Gemäß einer weiteren bevorzugten Ausgestaltung der erfindungsgemäßen Fördervorrichtung ist mindestens eine Abfuhrebene zu einem zweiten Trichterauslass vorgesehen, die mit dem Abfuhrspalt in Verbindung steht, wobei der erste und der zweite Trichterauslass in einer Förderrichtung der Fördervorrichtung hintereinander in Schwerkraftrichtung unterhalb der siebartigen Förderfläche angeordnet sind.

Wie oben bereits beschrieben worden ist, dient der Abfuhrspalt zwischen dem Ende der geneigten Zufuhrebene und dem ersten Trichterauslass einer Abfuhr größerer Mengen an losem Pulver im Vergleich zu den Pulvermengen, die durch das Rohrsieb gesiebt werden. Zur weiteren Unterstützung des schnellen Abtransports der Pulvermengen durch den Abfuhrspalt ist vorzugsweise in Schwerkraftrichtung unterhalb des Abfuhrspalts eine Abfuhrebene vorgesehen. Diese Abfuhrebene dient als Auffangbereich für die Pulvermenge, die den Abfuhrspalt passiert. Zudem leitet die Abfuhrebene das aufgenommene Pulver zu dem zweiten Trichterauslass weiter, über den es weiter abgeführt wird. Im Hinblick auf den zweiten Trichterauslass ist es bevorzugt, diesen mit oder ohne Sieb, vorzugsweise ein Rohrsieb oder ein Sieb obiger Bauart mit oder ohne Drucksensor und entsprechender Steuerung, zu betreiben. Wird der zweite Trichterauslass mit einem Rohrsieb betrieben, dann werden zwei parallele Trichterauslässe mit Sieb zur Verfügung gestellt, um möglichst feines und nicht verklebtes Pulver aus dem Pulverkuchen abzutrennen. Ist die an dem ersten Trichterauslass anstehende Pulvermenge für eine zeitlich effektive Abfuhr zu groß, dient der Abfuhrspalt in Kombination mit dem zweiten Trichterauslass für eine zusätzliche Abfuhr oder Abtransportstrecke des Pulvers in einen nachgeordneten Auffangbehälter. Zudem besteht die Möglichkeit, dass der zweite Trichterauslass die Pulverabfuhr übernimmt, falls der erste Trichterauslass verstopft oder abgeschaltet sein sollte.

Gemäß einer weiteren bevorzugten Ausgestaltung vorliegender Erfindung ist mithilfe des oben genannten Schwingungsantriebs die Fördervorrichtung, vorzugsweise zumindest die siebartige Förderfläche und mindestens ein Trichterauslass, in einem Frequenzbereich von 100-250 Hz, insbesondere 130-190 Hz, in Schwingungen versetzbar.

Es hat sich als vorteilhaft erwiesen, dass Schwingungen im Hertzbereich die Abfuhr des Pulvers aus einem anstehenden Pulverkuchen auf vorteilhafte Weise unterstützen. Während Schwingungen im Kilohertz-Bereich, beispielsweise Ultraschallschwingungen, dieses Siebergebnis bzw. die vorteilhaften Pulvermengen gesiebt durch das Rohrsieb nicht erzielen können, wirken sich in diesem Zusammenhang gerade Schwingungen im Frequenzbereich von 100-250 Hz unterstützend für den Pulvertransport durch das Rohrsieb und den Trichterauslass aus. In gleicher Weise ist es vorteilhaft aufgefallen, dass Schwingungen in diesem Frequenzbereich ebenfalls den Transport der Bauteile aus dem Pulverkuchen auf der siebartigen Förderfläche unterstützen. Daher werden vorzugsweise Schwingungen in dem oben genannten Frequenzbereich in die siebartige Förderfläche und in den mindestens einen Trichterauslass eingeprägt, um den Abtransport der einzelnen Bestandteile des Pulverbetts, also der Bauteile und des noch vorhandenen losen Pulvers, zu unterstützen. Als besonders vorteilhaft hat sich in diesem Zusammenhang erwiesen, wenn Schwingungen im Frequenzbereich von 130-190 Hz verwendet werden.

Gemäß einer weiteren bevorzugten Ausgestaltung der erfindungsgemäßen Fördervorrichtung ist der mindestens eine Trichterauslass mit einer Absaugvorrichtung verbindbar, um im Vergleich zur Umgebung der Fördervorrichtung einen Unterdruck in dem mindestens einen Trichterauslass zu erzeugen. Gemäß einer weiteren bevorzugten Ausgestaltung ist der erste Trichterauslass mit einer ersten Absaugvorrichtung und der zweite Trichterauslass mit einer zweiten Absaugvorrichtung verbunden oder verbindbar.

Mithilfe der angeschlossenen oder im Bedarfsfall zuschaltbaren Absaugvorrichtung wird der Abtransport des Pulvers durch das Rohrsieb und den angeschlossenen Trichterauslass oder durch den Trichterauslass ohne Rohrsieb unterstützt. Denn der im Trichterauslass erzeugte Unterdruck ergänzt sich mit der auf das Pulver wirkenden Schwerkraft sowie den über den Schwingungsantrieb eingeprägten Schwingungen. Auf diese Weise wird der Abtransport des Pulvers beschleunigt, um größere Mengen des Pulverkuchens fördern und trennen zu können.

Vorliegende Erfindung offenbart zudem ein Förder-Trenn-Verfahren für eine Bauteil-Partikelmaterial-Mischung eines additiven Herstellungsverfahrens in Kombination mit der oben beschriebenen trichterförmigen Fördervorrichtung in ihren unterschiedlichen bevorzugten Ausgestaltungen. Die bevorzugte Fördervorrichtung dient dazu,

Bauteile und loses Partikelmaterial der Bauteil-Partikelmaterial-Mischung zu fördern und zumindest teilweise voneinander zu trennen. Das Förder-Trenn-Verfahren weist die folgenden Schritte auf: Fördern der Bauteil-Partikelmaterial-Mischung schwingungsgetrieben entlang einer Förderstrecke mit einer siebartigen Förderfläche, zumindest teilweises Trennen von Bauteilen und losen Partikelmaterials der Bauteil-Partikelmaterial-Mischung während des Förderns entlang der siebartigen Förderfläche, wobei das lose Partikelmaterial schwerkraftgetrieben durch die siebartige Förderfläche fällt, Abgeben der Bauteile an einem Förderauslass der Förderstrecke sowie Abgeben des losen Partikelmaterials von der Fördervorrichtung über zumindest einen Trichterauslass, der bezogen auf die Schwerkraft unterhalb der siebartigen Förderfläche angeordnet ist.

Das oben beschriebene bevorzugte Förder-Trenn-Verfahren ist darauf gerichtet, ein nach einem additiven Herstellungsprozess, wie beispielsweise dem selektiven Lasersintern, vorliegendes Pulverbett in die Bestandteile Bauteile und loses Pulver bzw. loses Partikelmaterial zu trennen und diese über separate Transportwege der weiteren Bearbeitung zuzuführen. Während dieses Förderns der Bauteile wird lose anhaftendes Pulver an den Bauteiloberflächen durch Erschütterungen der Bauteile während des Transports, vorzugsweise durch Schwingungen, von der Bauteiloberfläche zumindest teilweise gelöst. Dieses gelöste Pulver fällt zusammen mit weiterem losem Pulver des Pulverbetts durch die siebartige Förderfläche und bewegt sich auf diese Weise entlang eines zweiten Förderwegs getrennt von dem Förderweg der Bauteile. Während sich der Förderweg der Bauteile in Richtung des Förderauslasses der Förderstrecke erstreckt, wo die Bauteile abgegeben werden, verläuft die zweite Förderstrecke des losen Pulvers in Richtung des Pulverauslasses, um über den mindestens einen Pulverauslass das lose Pulver abzuführen.

Zur Unterstützung des erfindungsgemäßen Förder-Trenn-Verfahrens werden vorzugsweise Schwingungen zumindest in der siebartigen Förderfläche und in dem mindestens einen Trichterauslass erzeugt, um den Bauteil- und den Materialtransport zu unterstützen. Denn es hat sich als vorteilhaft erwiesen, dass mit Hilfe von Schwingungen in dem mindestens einen Trichterauslass eine dort vorhandene Pulvermenge schneller bewegt werden kann. Das gleiche gilt für die Förderfläche, auf der die Bauteile allein durch eingeprägte Schwingungen in die Förderfläche oder durch die Kombination von Schwingungen mit wirkender Schwerkraft bewegt werden können.

Gemäß einer weiteren bevorzugten Ausgestaltung des erfindungsgemäßen Förder-Trenn-Verfahrens ist der weitere Schritt vorgesehen: Sieben des losen Partikelmaterials zumindest in einem ersten Trichterauslass durch ein Rohrsieb, welches am Eingang des Trichterauslasses angeordnet ist.

Wie oben bereits beschrieben worden ist, liegt in einem Pulverkuchen neben den Bauteilen loses Pulvermaterial unterschiedlichen Verklumpungsgrades vor. Das bedeutet, dass das im additiven Herstellungsverfahren, wie beispielsweise dem selektiven Lasersintern, zu verarbeitende Pulver bzw. die zu verarbeitende Materialmischung gar nicht oder in einem unterschiedlichen Grad durch die zugeführte Energie des Lasers verklebt und/oder verändert worden ist. Diese Veränderungen führen beispielsweise dazu, dass Pulvermengen verfestigen und/oder Pulverpartikel unterschiedlich stark und in unterschiedlicher Menge aneinanderhaften. Je stärker das Pulver des Pulverkuchens durch die zugeführte Energie im additiven Herstellungsprozess verklebt worden ist, umso weniger ist dieses Pulver geeignet, um es erneut dem additiven Herstellungsverfahren zuzuführen. Daher wird mithilfe des erfindungsgemäß bevorzugten Förder-Trenn-Verfahrens angestrebt, wiederverwertbares Pulver von zu stark verklebtem, also ungeeignetem Pulver für die weitere Herstellung zu trennen. Da durch zu viel Energieeintrag in das Pulver Pulvermengen verklumpen oder nicht mehr in der ursprünglichen Partikelgröße vorliegen, lassen sich vorzugsweise die unterschiedlichen Pulverzustände beispielsweise mit Hilfe eines Siebs voneinander trennen. Daher wird vorzugsweise ein Rohrsieb am Eingang des mindestens einen Trichterauslasses angeordnet. Eine Maschengröße des Rohrsiebs legt fest, welche Partikelgrößen in den Trichterauslass zum Abtransport gelangen können und welche durch die fehlende Durchdringbarkeit des Siebs am Eingang des Trichterauslasses aufgestaut werden. Vorzugsweise wird das in den Trichterauslass über das Rohrsieb eingelassene Material dem additiven Herstellungsverfahren über die bevorzugte Zwischenstation eines Pulvertanks und/oder einer Mischstation erneut zugeführt. Das am Rohrsieb des Trichterauslasses aufgestaute Material wird vorzugsweise als Abfallmaterial aus dem weiteren Verarbeitungsprozess abgeführt.

Gemäß einer weiteren bevorzugten Ausgestaltung des Förder-Trenn-Verfahrens ist als weiterer Schritt vorgesehen: Erzeugen eines relativen Unterdrucks in dem mindestens einen Trichterauslass, um die Abfuhr des losen Partikelmaterials zu unterstützen. In diesem Zusammenhang ist es bevorzugt, dass der erzeugte Unterdruck in Bezug auf den Umgebungsdruck der Fördervorrichtung in einem Bereich von 30-250 mbar liegt.

Gemäß einer weiteren bevorzugten Ausgestaltung des erfindungsgemäßen Förder-Trenn-Verfahrens umfasst ein weiterer Schritt: Abgeben des losen Partikelmaterials über einen zweiten Trichterauslass, der im Vergleich zum ersten Trichterauslass kein Sieb oder ein Sieb mit anderer Maschengröße im Vergleich zum Sieb des ersten Trichterauslasses aufweist. Zudem ist es weiterhin in dem erfindungsgemäßen Förder-Trenn-Verfahren bevorzugt, loses Partikelmaterial in mindestens einem Materialtank zu sammeln, das lose Partikelmaterial mit unverarbeitetem Partikelmaterial zu mischen und danach die Materialmischung aus losem Partikelmaterial und unverarbeitetem Partikelmaterial dem additiven Herstellungsverfahren zuzuführen.

Zudem offenbart vorliegende Erfindung ein Entpackungs-Kreislauf-System zum Entpacken und Entstapeln von Bauteilen eines Pulverkuchens aus einem additiven Herstellungsverfahren. Das Entpackungs-Kreislauf-System weist die folgenden Merkmale auf: eine trichterförmige Fördervorrichtung gemäß einer der oben beschriebenen Ausführungsformen, in die ein Pulverkuchen eines Baubehälters ausleerbar ist, ein Abfuhrband in einer Förderrichtung anschließend an die Fördervorrichtung und benachbart zum Förderauslass, mit und auf dem die Bauteile förderbar und inspizierbar sind, um einen Entpulverungszustand der Bauteile zu bestimmen, und ein Rückführungsband, mit dem Bauteile vom Abfuhrband, vorzugsweise mit einer Weiche, zurück in die trichterförmige Fördervorrichtung bewegbar sind, um ein erneutes Entpulvern der Bauteile zu starten.

### 4. Kurze Beschreibung der begleitenden Zeichnungen

Die bevorzugten Ausführungsformen vorliegender Erfindung werden unter Bezugnahme auf die begleitende Zeichnung näher erläutert. Es zeigen:
- Figur 1: eine perspektivische Seitenansicht einer bevorzugten Ausführungsfonn der erfindungsgemäßen trichterförmigen Fördervorrichtung,
- Figur 2: eine Draufsicht auf eine bevorzugte Ausführungsform der erfindungsgemäßen trichterförmigen Fördervorrichtung ohne siebartige Förderfläche,
- Figur 3: eine schematische seitliche Schnittansicht einer bevorzugten Ausführungsform der erfindungsgemäßen trichterförmigen Fördervorrichtung in Kombination mit einer Einfülltrichteranordnung zum Einfüllen des Pulverkuchens in die trichterförmige Fördervorrichtung,
- Figur 4: eine schematische Darstellung bevorzugter Ausgestaltungen der siebartigen Förderfläche,
- Figur 5: eine vergrößerte Darstellung des ersten Trichterauslasses gemäß Figur 3 mit einem darin angeordneten Sieb, bevorzugt ein Rohrsieb,
- Figur 6: eine bevorzugte Ausführungsform eines Entpackungs-Kreislauf-Systems für Pulverkuchen mit integrierter erfindungsgemäß bevorzugter Förderstrecke,
- Figur 7: eine bevorzugte Darstellung und Auswahl von Peripheriegeräten, die vorzugsweise in Kombination mit der Förderstrecke verwendet werden,
- Figur 8: ein Flussdiagramm einer bevorzugten Ausführungsform eines Förder-Trenn-Verfahrens.

### 5. Detaillierte Beschreibung der bevorzugten Ausführungsformen vorliegender Erfindung

Bei der Herstellung von Prototypen und inzwischen auch in der Serienfertigung werden additive Fertigungsprozesse immer relevanter. Im Allgemeinen sind unter "additiven Fertigungsprozessen" solche Fertigungsprozesse zu verstehen, bei denen, in der Regel auf Basis von digitalen 3D Konstruktionsdaten, beispielsweise durch das selektive Verschmelzen von Material, ein Fertigungsprodukt bzw. Bauteil aufgebaut wird. Der Aufbau erfolgt dabei meist, aber nicht zwingend, schichtweise. Als ein Synonym für die additive Fertigung wird häufig auch der Begriff "3D-Druck" verwendet, die Herstellung von Modellen, Mustern und Prototypen mit additiven Fertigungsprozessen wird oft als "Rapid Prototyping" und die Herstellung von Werkzeugen als "Rapid Tooling" bezeichnet.

Wie eingangs erwähnt, ist ein Kernpunkt bei vielen additiven Fertigungsprozessen die selektive Verfestigung des Aufbaumaterials, wobei diese Verfestigung bei vielen Fertigungsprozessen mit Hilfe einer Bestrahlung mit Strahlungsenergie, z. B. elektromagnetischer Strahlung, insbesondere Licht- und/oder Wärmestrahlung, aber ggf. auch mit Teilchenstrahlung, wie z. B. Elektronenstrahlung, erfolgen kann. Beispiele für mit einer Bestrahlung arbeitende Verfahren sind das "selektive Lasersintern" oder "selektive Laserschmelzen". Dabei werden wiederholt dünne Schichten eines meist pulverförmigen Aufbaumaterials bzw. Baumaterials übereinander aufgebracht. In jeder Schicht wird das Aufbaumaterial durch räumlich begrenztes Bestrahlen der Stellen, die in der jeweiligen Schicht dem Querschnitt des herzustellenden Fertigungsprodukts entsprechen, selektiv verfestigt, indem die Pulverkörner des Aufbaumaterials mit Hilfe der durch die Strahlung an dieser Stelle lokal eingebrachten Energie teilweise oder vollständig aufgeschmolzen werden. Nach einer Abkühlung sind diese Pulverkörner dann miteinander in einem Festkörper verbunden.

Die Fertigung des Bauteils erfolgt dabei in der Regel in einem Baubehälter, der eine umlaufende Baubehälterwand und eine darin vertikal bewegliche Aufbauplattform aufweist. Diese Aufbauplattform schließt den Baubehälter nach unten ab und bildet damit dessen Boden. Ein Bauteil oder eine Mehrzahl von zu fertigenden Bauteilen können auf der Aufbauplattform selber aufgebaut werden, die dann die Bauunterlage bildet.

Nach Fertigung des Bauteils befindet sich nicht nur das Bauteil/die Bauteile sondern auch das nicht verfestigte Baumaterial bzw. Pulver im Baubehälter 82. Diese bilden gemeinsam den Pulverkuchen, der allgemein auch als Bauteil-Partikelmaterial-Mischung bezeichnet wird. Vorzugsweise besteht der Pulverkuchen aus Kunststoff-Bauteilen sowie Kunststoff- oder Polymer-Pulver. Nach Abschluss eines bevorzugten Herstellungsprozesses wird der Pulverkuchen zum Entpacken der Bauteile, also zum Trennen der Bauteile von umgebendem Pulver, über eine bevorzugte Trichteranordnung 86 in eine trichterförmige Fördervorrichtung 1 gegeben. Die trichterförmige Fördervorrichtung 1 ist in ein bevorzugtes Entpackungs-Kreislauf-System 80 integriert, um den Pulverkuchen zu entstapeln, die Bauteile weitestgehend von losem Pulver zu trennen und die Bauteile und das lose Pulver weiteren Verarbeitungsschritten zuzuführen.

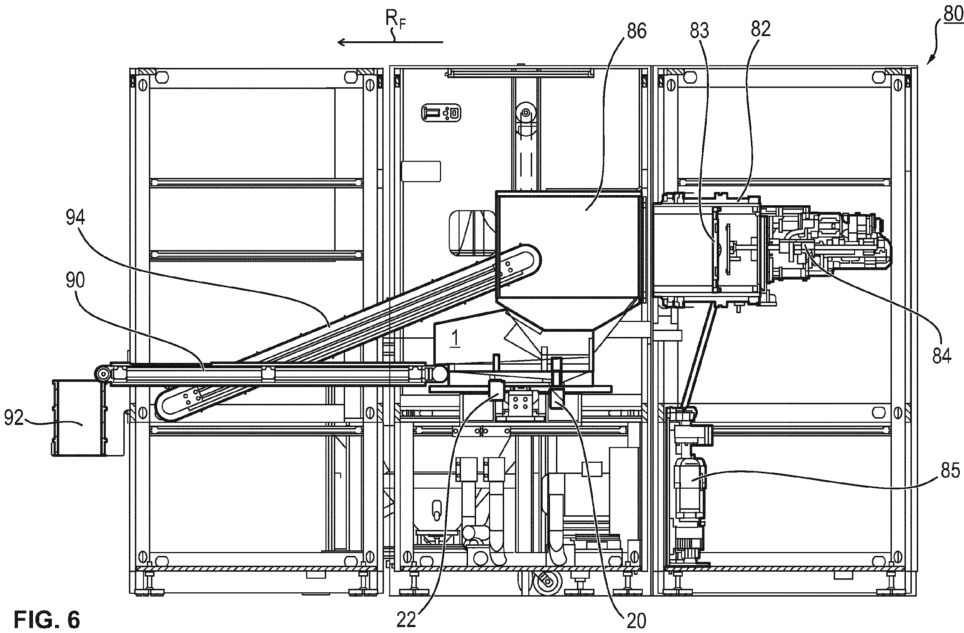

Zur Illustration zeigt Figur 6 eine bevorzugte Ausführungsform eines Entpackungs-Kreislauf-Systems 80. Über eine bevorzugte Kippvorrichtung 85 wird der Baubehälter 82 zur Trichteranordnung 86 bewegt und dort zum Entleeren gekippt. Der Baubehälter 82 ist mit einer Ausschubvorrichtung 84 verbunden, die einen bewegbaren Boden 83 in Richtung Öffnung des Baubehälters 82 schieben kann. Auf dem beweglichen Boden 83 befindet sich der Pulverkuchen, der in die Trichteranordnung 86 ausgeschoben wird. Von dort fällt der Pulverkuchen in die Fördervorrichtung 1, die unten näher beschrieben ist.

Während loses Pulver bevorzugt über einen oder mehrere Trichterauslässe 20, 22 abgeführt wird, werden die Bauteile über eine siebartige Förderfläche 10 und einen Förderauslass 7 auf ein Abfuhrband 90 abgegeben. Das Abfuhrband 90 wird bevorzugt auch als Inspektionsstrecke der Bauteile bezeichnet. Das Abfuhrband 90 bewegt die Bauteile in Förderrichtung R_{F} und ermöglicht gleichzeitig ein Überwachen oder Inspizieren der Bauteile. Die bevorzugte Überwachung der Bauteile beurteilt, inwieweit die Bauteile von anhaftenden Pulverresten befreit, also entpackt, worden sind und ob weitere Pulverreste mit Hilfe der Förderstrecke 1 entfernt werden können. Dies schließt die Frage ein, ob weitere Pulverreste von den Bauteiloberflächen zurückgewonnen werden können.

Bauteile in einem akzeptablen Reinigungszustand werden bevorzugt an einen Container 92 für fertige Bauteile abgegeben. Dieser befindet sich bevorzugt am Ende des Abfuhrbands 90.

Sollten die Bauteile auf der Abfuhrstrecke noch entfernbare Pulverreste aufweisen, werden diese Bauteile durch eine bevorzugte Weiche auf ein Rückführungsband 94 umgeleitet. Das Rückführungsband 94 bewegt die Bauteile zurück in die Trichteranordnung 86, von der sie wieder in die trichterförmige Fördervorrichtung fallen. Vorzugsweise werden die Bauteile direkt auf die Förderfläche 10 der Fördervorrichtung bewegt, ohne dass sich ein zu entstapelndes Pulverbett auf der Förderfläche 10 befindet. Dies eröffnet die bevorzugte Möglichkeit, Schwingungen der Förderfläche 10 direkt auf die Bauteile zu übertragen, um Pulverreste zu lösen, Bauteile auf der Förderfläche 10 umzuorientieren und aus eventuellen Hohlräumen der Bauteile zu entfernen. Zudem lassen sich die Schwingungen des Schwingungsantriebs in Anpassung an die zu reinigenden Bauteile in Amplitude und/oder Frequenz verändern. Dadurch werden die Bauteile umorientiert und/oder stärker erschüttert und/oder langsamer oder schneller entlang der Förderstrecke in Förderrichtung R_{F} bewegt.

Danach bewegen sich die Bauteile wieder entlang des Abfuhrbands 90. Dort wird anhand einer Überwachung entschieden, ob die Bauteile an den Container 92 abgeführt oder über die Weiche erneut der Fördervorrichtung 1 zugeführt werden.

Entsprechend ergibt sich daraus ein Entpackungskreislauf, den die Bauteile bevorzugt einmal oder mehrmals durchlaufen.

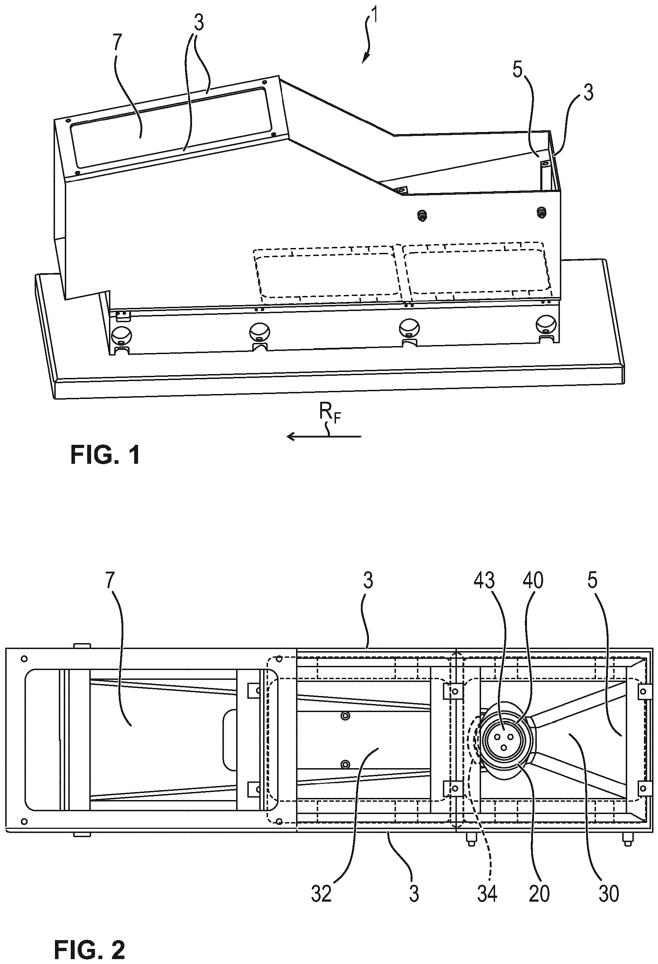

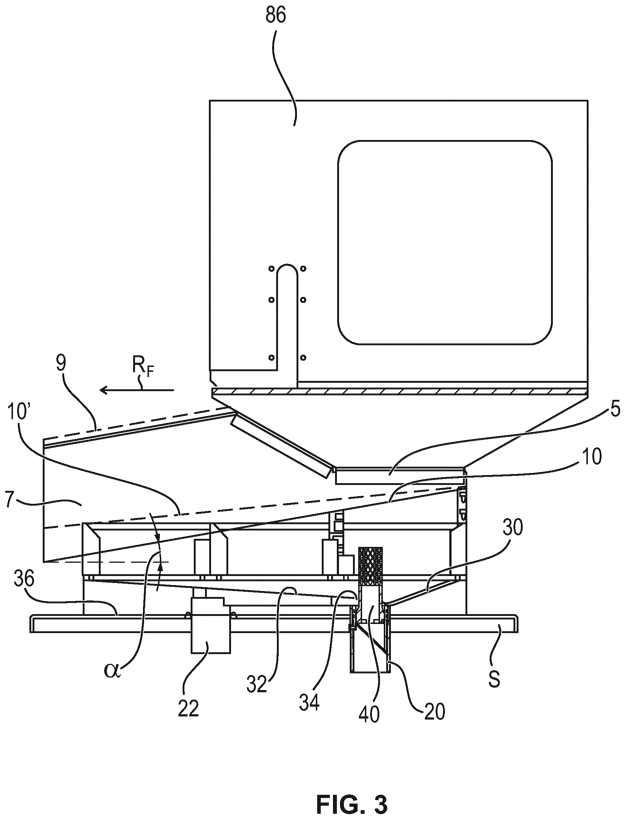

Eine bevorzugte Ausführungsform der trichterförmigen Fördervorrichtung 1 zeigt Figur 1 in einer Seitenansicht. Die Seitenwände 3 begrenzen seitlich eine siebartige Förderfläche der Fördervorrichtung 1, die in Figur 1 durch die Seitenwände 3 verdeckt ist. Die Fördervorrichtung 1 bildet durch die Seitenwände 3 einen nach oben offenen Behälter, um das Pulverbett bestehend aus hergestellten Bauteilen und unverfestigtem Pulver als Schüttgut aufzunehmen. Zur Vermeidung einer Staubbelastung der Umgebung der Fördervorrichtung 1 ist die Öffnung der Fördervorrichtung 1 bei der Zufuhr des Pulverbetts und während des Betriebs durch eine bevorzugte Haube 9 (gestrichelt dargestellt) und die Trichteranordnung 86 abgedeckt bzw. verschlossen (siehe Figur 3). Ein weiterer Hintergrund der bevorzugten Abdeckung der Fördervorrichtung 1 ist, dass die Luft durch möglichst geringe Öffnungen bevorzugt durch die Trichterauslässe 20, 22 (siehe unten) angesaugt wird. Dadurch wird ein hoher Volumenstrom erreicht, der das Austreten einer Pulverstaubwolke und eine damit verbundene Explosionsgefahr außerhalb der Fördervorrichtung 1 bevorzugt vermeidet.

Innerhalb der Fördervorrichtung 1 werden Bauteile und Pulver in einer Förderrichtung R_{F} bewegt. Dazu wird vorzugsweise das Pulverbett an einem Fördereinlass 5, hier bevorzugt der Beginn der Förderstrecke, in die Fördervorrichtung 1 gegeben. Mithilfe der siebartigen Förderfläche (siehe unten) wird das Pulverbett zu einem Förderauslass 7 bewegt, wobei Bauteile und Pulver voneinander getrennt werden.

Anhand der Figuren 1 und 2 ist erkennbar, dass am Förderauslass 7 keine begrenzende Seitenwand 3 vorgesehen ist. Am Förderauslass 7 endet vorzugsweise die siebartige Förderfläche. Die auf der siebartigen Förderfläche befindlichen Bauteile und das Pulver werden an eine andere Transporteinheit abgegeben. In Figur 2 ist eine Ansicht in die Fördervorrichtung 1 gezeigt, in der die siebartige Förderfläche nicht dargestellt ist.

Figur 3 zeigt eine schematische seitliche Schnittansicht einer bevorzugten Ausgestaltung der Fördervorrichtung 1. In dieser Schnittansicht sind die begrenzenden Seitenwände 3 für eine vereinfachte Darstellung nicht gezeigt. Stattdessen ist die siebartige Förderfläche 10 dargestellt. Die siebartige Förderfläche 10 begrenzt in der Darstellung der Figur 3 die Fördervorrichtung 1 nach oben.

Gemäß unterschiedlichen bevorzugten Ausgestaltungen der erfindungsgemäßen Fördervorrichtung 1 verläuft die siebartige Förderfläche 10 senkrecht zu einer wirkenden Schwerkraft. Um ein Fördern der Bauteile und des Pulvers in Förderrichtung R_{F} zu unterstützen, ist es ebenfalls bevorzugt, die Förderfläche 10 in Richtung des Förderauslasses 7 um den Winkel α in einem Bereich von 0 °<α≤10 °geneigt anzuordnen.

Alternativ oder ergänzend zur bevorzugten Unterstützung der Förderung des Pulverbetts in Förderrichtung R_{F} durch eine Neigung der Förderfläche 10 wird die Förderfläche 10 mithilfe eines bekannten Schwingungsantriebs S in Schwingungen versetzt. Gemäß einer bevorzugten Ausgestaltung ist der Schwingungsantrieb S mit der siebartigen Förderfläche 10 und/oder mit der gesamten Fördervorrichtung 1 strukturell verbunden, um sie in Schwingungen zu versetzen. Die durch den Schwingungsantrieb S erzeugten Schwingungen unterstützen eine Bewegung der Bauteile (nicht gezeigt) in Förderrichtung RF entlang der Förderfläche 10. Zudem unterstützen die Schwingungen eine Abfuhr des Pulvers durch siebartige Öffnungen der Förderfläche 10 in Richtung der Schwerkraft. Ein Schwingungsantrieb besteht beispielsweise aus rotierenden oder aus elektromagnetisch angetriebenen Schwingungsmassen.

Eine Fördergeschwindigkeit in Förderrichtung R_{F} und eine Frequenz und/oder Amplitude der Schwingungen des Schwingungsantriebs S werden vorzugsweise so gewählt, dass über die Förderstrecke zwischen Fördereinlass 5 und Förderauslass 7 Bauteile und Pulver weitestgehend getrennt voneinander vorliegen.

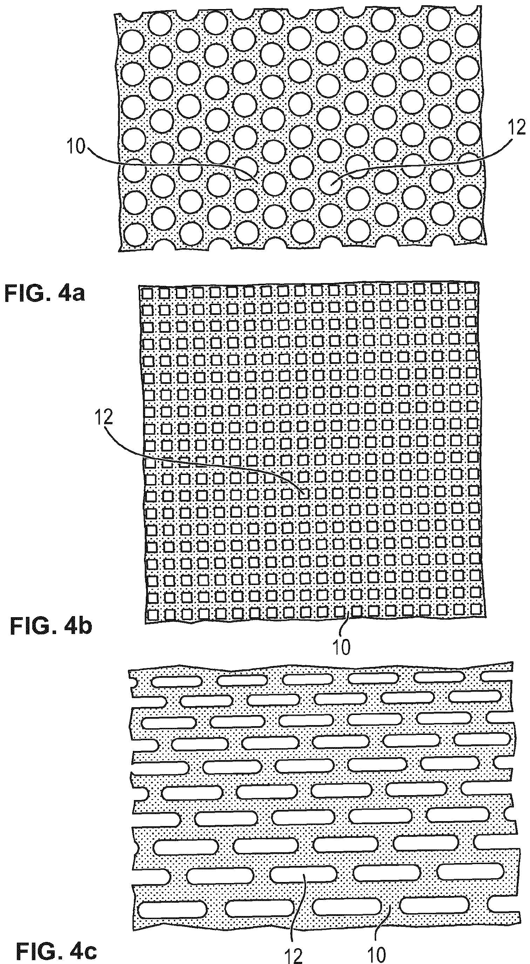

Bevorzugte Ausgestaltungen der siebartigen Förderfläche 10 sind in den Figuren 4a, b, c dargestellt. Es hat sich als vorteilhaft erwiesen, die siebartige Struktur in Abhängigkeit von der Bauteilform und/oder Bauteilgröße, der Pulverkonfiguration im Pulverbett und der Länge der Förderstrecke zwischen Fördereinlass 5 und Förderauslass 7 zu variieren. Dazu weist die Förderfläche 10 bevorzugt runde, eckige und/oder langloch-ähnliche Öffnungen 12 variabler Dichte und/oder Größe auf. Zudem ist es bevorzugt, Langlöcher unterschiedlicher oder gleicher Orientierung und/oder Langlöcher unterschiedlicher oder gleicher Größe zu verwenden. Es ist ebenfalls bevorzugt, die oben diskutierten unterschiedlichen Öffnungsformen in einer Förderfläche 10 miteinander zu kombinieren.

In Schwerkraftrichtung unterhalb der Förderfläche 10 ist mindestens ein Trichterauslass 20 angeordnet. Gemäß der in Figur 3 gezeigten bevorzugten Ausgestaltung sind zwei Trichterauslässe 20 in Förderrichtung R_{F} hintereinander in Schwerkraftrichtung unterhalb der siebartigen Förderfläche 10 angeordnet.

Es ist ebenfalls bevorzugt, mit zunehmender Größe der Förderfläche 10, d. h. mit zunehmender Breite oder mit zunehmender Länge der Förderfläche 10 in Förderrichtung R_{F}, die Anzahl der Trichterauslässe 20 zu erhöhen. Es ist weiterhin bevorzugt, Trichterauslässe 20 senkrecht zur Förderrichtung R_{F} nebeneinander oder versetzt zueinander anzuordnen.

Nachdem das Pulverbett nach Abschluss des additiven Herstellungsverfahrens in die Fördervorrichtung 1 und auf die siebartige Förderfläche 10 transportiert worden ist, bewegen sich die Bauteile und das Pulver in Förderrichtung R_{F} entlang der Förderfläche 10. Diese Bewegung wird durch die wirkende Schwerkraft und/oder durch die in die Fördervorrichtung 1 eingeprägten Schwingungen erzeugt. Es wurde ebenfalls erkannt, dass ein auf der Förderfläche 10 befindliches Pulverbett durch nachfolgend auf die siebartige Förderfläche 10 geschüttete oder aufgebrachte Pulverbettmengen ebenfalls eine Bewegung des Pulverbetts in Förderrichtung R_{F} bewirken. Dies wird bevorzugt durch die oben genannte Neigung der Förderfläche 10 unterstützt, obwohl die Neigung nicht zwingend erforderlich ist.

Im Pulverbett liegt neben den Bauteilen das unverfestigte Pulver in unterschiedlichen Zuständen vor. Das bedeutet, dass aufgrund des Energieeintrags in das Pulver während des additiven Herstellungsverfahrens das Pulver unterschiedlich stark verfestigt worden ist. Als Folge liegt das Pulver unverfestigt, feinkörnig oder mit mehr oder weniger stark untereinander verklebten Pulverpartikeln vor. Unabhängig vom Zustand des Pulvers passiert das Pulver die siebartigen Öffnungen 12 der Förderfläche 10.

Man hat im Rahmen der additiven Herstellung erkannt, dass Pulver mit niedrigem Verklumpungsgrad der additiven Herstellung erneut zuführbar ist. Diese Wiederverwertung des Pulvers wird zudem dadurch unterstützt, dass teilweise benutztes Pulver mit nicht benutztem oder frischem Pulver gemischt wird, bevor es der additiven Herstellung erneut zugeführt wird.

Über die Trichterauslässe 20 wird das Pulver aus dem Pulverbett abgeführt. Zu diesem Zweck ist mindestens eine Zufuhrebene 30 vorgesehen, die geneigt auf den Trichterauslass 20 zuläuft. Die mindestens eine Zufuhrebene 30 fängt das durch die siebartige Förderfläche 10 dringende Pulver auf und leitet es in Richtung Trichterauslass 20.

Die Leitung des Pulvers auf der mindestens einen Zufuhrebene 30 erfolgt schwerkraftgetrieben und/oder unterstützt durch die Schwingungen des Schwingungsantriebs S.

Vorzugsweise ist mindestens ein Trichterauslass 20 mit einem Sieb, bevorzugt ein Rohrsieb 40, ausgestattet. Das Rohrsieb 40 besteht aus einer umlaufenden Mantelfläche, die durch Maschen bestimmter Größe durchbrochen ist. Die Maschengröße entscheidet bevorzugt darüber, ob nur unverfestigtes Pulver oder teilweise verfestigtes Pulver das Rohrsieb 40 passieren kann.

Das Rohrsieb 40 hat vorzugsweise eine Maschengröße von 100-200 µm.

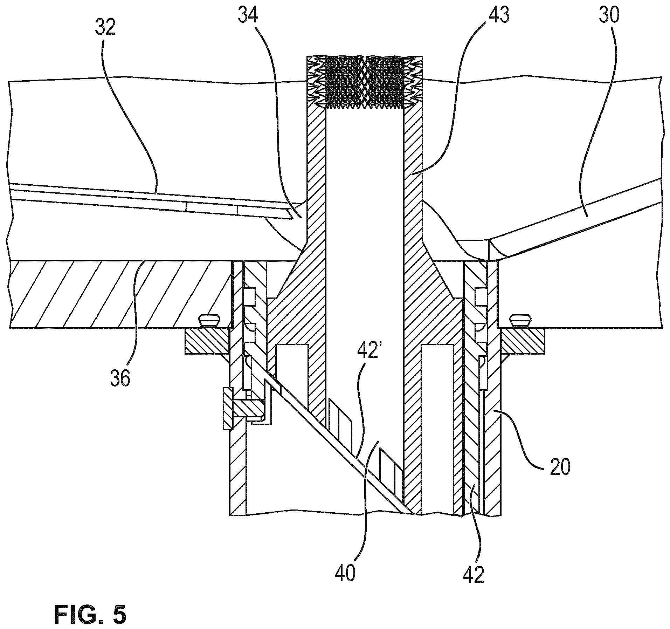

Gemäß einer weiteren bevorzugten Ausgestaltung des Siebs 40 hat es eine rohrförmige oder hohlzylindrische Mantelfläche 42, die innerhalb des Trichterauslasses 20 gehalten ist. Gemäß einer bevorzugten Ausgestaltung ist die Mantelfläche mit Maschen durchbrochen, um Pulver durchzulassen. Gemäß einer weiteren Ausgestaltung ist eine Siebfläche 42' im inneren des Rohrs angeordnet. Diese Siebfläche 42' ist bevorzugt senkrecht oder geneigt zur Längsachse des Rohrs orientiert (siehe Fig. 5). Zudem ist es bevorzugt, in Schwerkraftrichtung oberhalb des Trichterauslasses und des Siebs 40 einen Lufteinlass, vorzugsweise einen Schnorchel 43, bereitzustellen. Der Schnorchel 43 gewährleistet bevorzugt, dass der Trichterauslass 20 nicht vollständig durch Pulver zugesetzt wird und eine gewisse Strömungsgeschwindigkeit aufrechterhalten wird.

Das Pulver wird über die mindestens eine Zufuhrebene 30 zur Außenseite der Mantelfläche des Rohrsiebs 40 geleitet. Dort staut sich das Pulver, bis es die Maschen in der Mantelfläche 42 des Rohrsiebs 40 passiert. Nach Passieren des Rohrsiebs 40 wird das Pulver über den Trichterauslass 20 in einen ersten Pulvertank 50 (siehe Figur 6) abgeführt.

Der erste Pulvertank 50 nimmt bevorzugt loses Pulver aus dem Pulverbett auf, welches keine oder geringe Verklumpungen zeigt oder in den ersten Teilen des Pulverkuchens aus dem Baubehälter 82 ausgeschoben worden ist. Zudem wird bevorzugt Pulver im ersten Pulvertank 50 gesammelt welches Das Sieb 40 passieren konnte.

Erfindungsgemäß bevorzugt wird das Sieben des Pulvers durch das Rohrsieb 40 durch eingeprägte Schwingungen des Schwingungsantriebs S unterstützt. Es hat sich als vorteilhaft erwiesen, wenn das Rohrsieb 40 in Schwingungen von 100-250 Hz, vorzugsweise von 130-190 Hz, versetzt wird, um das Pulver über das Rohrsieb 40 und den Trichterauslass 20 abzuführen.

Vorzugsweise unterstützen Schwingungen dieses Frequenzbereichs auch das Fördern der Bauteile und des Pulverbetts entlang der Förderfläche bzw. auf der Förderfläche 10.

Es ist ebenfalls bevorzugt, die Abfuhr des Pulvers durch den Trichterauslass 20 mit einen relativen Unterdruck im Vergleich zum Umgebungsdruck zu unterstützen. Dazu wird gemäß einer bevorzugten Ausgestaltung vorliegender Erfindung eine zu und abschaltbare Absaugeinrichtung mit dem Trichterauslass 20 verbunden. Diese erzeugt vorzugsweise einen relativen Unterdruck von 50-200 mbar im Vergleich zum Umgebungsdruck.

Über die Zufuhrebenen 30, 32 dem Trichterauslass 20 zugeleitetes Pulver staut sich häufig an der Mantelfläche 42 des Rohrsiebs 40. Es hat sich gezeigt, dass sich angestautes Pulver bevorzugt entlang des Umfangs des Rohrsiebs 40 verteilt. Ein derartiger Stau ist verursacht durch zu große Pulvermengen oder aber durch Verklumpungen des Pulvers, die nicht das Sieb 40 passieren können.

Um einen Stau des Pulvers am Rohrsieb 40 und damit ein mögliches Verstopfen oder Blockieren des Rohrsiebs zu vermeiden und um stärker verklebte Pulverbrocken abzuführen, endet die zweite Zufuhrebene 32 vorzugsweise um einen Abfuhrspalt 34 beabstandet zum Rohrsieb 40. Der bevorzugte Abfuhrspalt 34 leitet vorzugsweise Pulver auf eine dritte Zufuhrebene 36 ab. Diese ist in Schwerkraftrichtung unterhalb der zweiten Zufuhrebene 32 angeordnet.

Es ist ebenfalls bevorzugt, die Zufuhrebene 30 mit einem Abfuhrspalt auszustatten. Der Abfuhrspalt 34 muss sich nicht über die gesamte Breite der Zufuhrebene 30, 32 erstrecken. Vorzugsweise stellt der Abfuhrspalt 34 eine Abfuhröffnung für aufgestautes Pulver am Rohrsieb 40 oder übermäßig vorhandenes Pulver auf der jeweiligen Zufuhrebene dar.

Vorzugsweise leitet die Zufuhrebene 36 das Pulver zu mindestens einem weiteren Trichterauslass 22. Je nach Ausgestaltung der Fördervorrichtung 1 wird der zweite Trichterauslass 22 mit oder ohne Rohrsieb betrieben. Bei einem Betrieb ohne Rohrsieb ist die Abfuhr stärker verfestigten Pulvers leichter, welches vorzugsweise einem zweiten Pulvertank 50 zugeführt wird. Der zweite Pulvertank sammelt somit bevorzugt Pulver, welches für eine erneute Zufuhr zum 3D Herstellungsprozess nicht geeignet ist.

Es ist ebenfalls bevorzugt, ein Rohrsieb gleicher oder größerer Maschengröße im Vergleich zum Rohrsieb 40 mit dem zweiten Trichterauslass 22 zu kombinieren. Dies eröffnet die Möglichkeit, Pulver unterschiedlichen Verklumpungsgrades, also unterschiedlich starker Verfestigung differenziert über den ersten 20 und den zweiten Trichterauslass 22 abzuführen. Entsprechend ist auch der Einsatz einer Mehrzahl von Trichterauslässen mit oder ohne Rohrsieb bevorzugt.

Vorzugsweise werden Bauteile über das Rückführungsband 94 der Förderstrecke 1 erneut zugeführt (siehe oben). Wenn die Bauteile die Förderstrecke 1 erneut durchlaufen, werden weitere Pulverreste von den Bauteilen gelöst. Diese werden bevorzugt aufgrund der fehlenden Wiederverwertbarkeit direkt über den zweiten Trichterauslass 22 dem zweiten Pulvertank 50 zugeführt.

Zur weiteren Unterstützung der Pulverabfuhr durch den zweiten Trichterauslass 22 ist auch dieser bevorzugt mit einer zuschaltbaren Absaugeinrichtung verbunden. Im Hinblick auf den bevorzugten Unterdruckbereich am zweiten Trichterauslass gelten die gleichen Bedingungen, wie sie oben in Bezug auf den Trichterauslass 20 beschrieben worden sind.

Bei einer bevorzugten Umschaltung der Pulverabfuhr bspw. vom Trichterauslass 20 auf den Trichterauslass 22 wird der bevorzugte Unterdruck im Trichterauslass 20 abgeschaltet und im Trichterauslass 22 zugeschaltet. Diese Umschaltung erfolgt entsprechend, wenn Pulver durch den Pulverauslass 20 abgeführt werden soll.

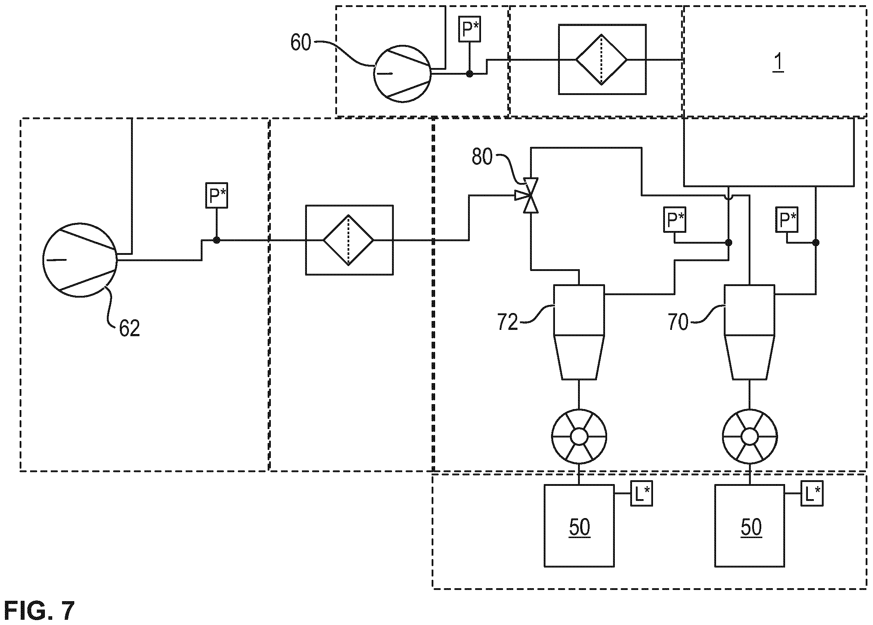

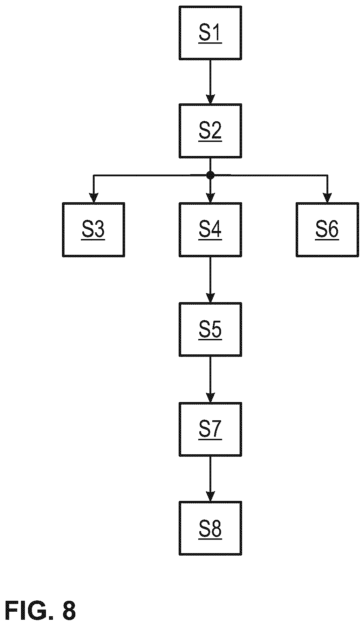

Figur 7 zeigt eine schematische Systemdarstellung der Fördervorrichtung 1 in Kombination mit weiteren Peripheriegeräten. Durch diese Kombination wird ein Förder-Trenn-Verfahren realisiert, welches in dem Flussdiagramm der Figur 8 zusammengefasst ist.

Zunächst wird im Schritt S1 das Pulverbett bestehend aus Bauteilen und Pulver entlang der Förderfläche 10 gefördert. Während des Förderns trennt die siebartige Förderfläche 10 das Pulverbett in Bauteil und Pulver (Schritt S2). Während die Bauteile durch den Förderauslass 7 abtransportiert werden (Schritt S3), werden die Pulverreste dem mindestens einen Trichterauslass 20, 22 zugeleitet.

Sowohl das Fördern der Bauteile wie auch das Weiterleiten des Pulvers erfolgt bevorzugt unterstützt durch Schwingungen. Diese Schwingungen erzeugt der Schwingungsantrieb S und gibt sie an die gesamte Förderstrecke 1, die Förderfläche 10 und die Trichterauslässe 20, 22 oder nur an ausgewählte Komponenten davon weiter.

Die bevorzugten Zufuhrebenen 30, 32, 36 leiten das Pulver zu mindestens einem Trichterauslass 20, bevorzugt zum ersten 20 und zweiten Trichterauslass 22. An dem jeweiligen Trichterauslass 20; 22 wird das Pulver abgeführt. Gemäß einer bevorzugten Ausgestaltung des erfindungsgemäßen Verfahrens wird das Pulver im Rohrsieb 40 gesiebt und dann an den Pulvertank 50 weitergeleitet (Schritt S4).

Im zweiten Trichterauslass 22 wird das Pulver vorzugsweise ungesiebt an den Pulvertank 52 weitergeleitet (Schritt S6).

Bevor das Pulver in den Pulvertank 50 gelangt, wird es vorzugsweise mit einem Zyklonabscheider 70 gesammelt und dann an den Pulvertank 50 weitergeleitet.

Vorzugsweise wird in den Trichterauslässen 20, 22 über Kompressoren 60, 62 ein zu- und abschaltbarer Unterdruck im Vergleich zum Umgebungsdruck erzeugt. Dieser Unterdruck unterstützt die Abfuhr des Pulvers in den jeweiligen Pulvertank 50, 52 und hat vorzugsweise eine Größe von 50-250 mbar im Vergleich zum Umgebungsdruck.

Über mindestens ein Ventil 80 ist vorzugsweise ein Unterdruck von dem ersten Trichterauslass 20 auf den zweiten Trichterauslass 22 umschaltbar und umgekehrt. Zudem wird das Ventil 80 bevorzugt eingesetzt, um nur einen oder eine Mehrzahl von Trichterauslässen zu betreiben. Diese Ansteuerung ist dann von Vorteil, wenn das Rohrsieb 40 zugesetzt oder überlastet ist und die Abfuhr des Pulvers nur über den zweiten Trichterauslass 22 erfolgen soll.

Gemäß einer anderen bevorzugten Ausgestaltung wird ein Rückschlagventil unter dem Trichterauslass/Trichterauslässen 20 und/oder 22 angeordnet, welches/welche bei einem Öffnungsdruck, z.B. 180 mbar, schaltet. Ist das Ventil offen, so wird die Luft an der Haubendecke 9 eingesaugt. Die bevorzugt angestrebte Funktion ist ein Aufrechterhalten der Luftströmung in der Fördervorrichtung 1 zum Explosionsschutz, sollte das Sieb 40 zusetzen. Setzt das Sieb zu, steigt der Druck, das Ventil öffnet und saugt nun an der Decke die Luft über eine "Notabsaugung" an.

Weiterhin bevorzugt wird der Druck unter dem Sieb 40 gemessen. Je nach Siebgeometrie kann erreicht werden, dass die Luft mit zunehmender Pulvermenge (die sich vor dem Sieb anstaut) gedrosselt wird. Der geringere Luftvolumenstrom lässt den Druck unter dem Sieb ansteigen. Über diese Sensorik kann z.B. die Einfördergeschwindigkeit (z.B. Fördergeschwindigkeit des Containerbodens 83) geregelt werden.

Nachdem das Pulver in den mindestens einen Pulvertank 50; 52 oder einem Materialtank gesammelt worden ist (Schritt S7), wird vorzugsweise das gesammelte Pulver mit bisher unverarbeitetem Pulver vermischt (Schritt S8).

Danach erfolgt bevorzugt eine Zufuhr der Pulvermischung aus wiedergewonnenem Pulver mit bisher unverarbeitetem Pulver zur additiven Herstellung (Schritt S9).

### Bezugszeichenliste

- 1: Fördervorrichtung
- 3: Seitenwände
- 5: Fördereinlass
- 7: Förderauslass
- 9: Haube
- 10: siebartige Förderfläche
- 12: siebartige Öffnungen
- 20: Trichterauslass
- 30: Zufuhrebene
- 32: zweite Zufuhrebene
- 34: Abfuhrspalt
- 36: dritte Zufuhrebene
- 40: Rohrsieb
- 42: Mantelfläche des Rohrsiebs
- 50: Pulvertank
- 52: Pulvertank
- 60, 62: Kompressor
- 70, 72: Zyklonabscheider
- 80: Entpackungssystem
- 82: Baubehälter mit bewegbarem Boden 83
- 83: Boden
- 84: Ausschubvorrichtung
- 85: Kippvorrichtung für den Baubehälter
- 86: Trichteranordnung
- 90: Abfuhrband
- 92: Container
- 94: Rückführungsband

- R_{F}: Förderrichtung
- S: Schwingungsantrieb

## Patentansprüche

1. Eine trichterförmige Fördervorrichtung (1), mit der Bauteile und loses Partikelmaterial einer Bauteil-Partikelmaterial-Mischung eines additiven Herstellungsverfahrens entstapelbar, förderbar und trennbar sind, wobei die Fördervorrichtung (1) aufweist:
eine siebartige Förderfläche (10), die sich in der Fördervorrichtung (1) zwischen einem Fördereinlass (5) und einem Förderauslass(7) der Fördervorrichtung (1) erstreckt und angepasst ist, um schwingungsgetrieben die Bauteil-Partikelmaterial-Mischung zu transportieren und in Bauteile und loses Partikelmaterial zu trennen,
einen Schwingungsantrieb (S), mit dem die Fördervorrichtung (1) in Schwingungen versetzbar ist, und
mindestens einen zwischen dem Fördereinlass (5) und dem Förderauslass (7) und in Schwerkraftrichtung unterhalb der siebartigen Förderfläche (10) angeordneten Trichterauslass (20) sowie
mindestens eine in Richtung des Trichterauslasses (20) geneigte Zufuhrebene (30; 32), die in Schwerkraftrichtung unterhalb der Förderfläche (10) angeordnet ist, um loses Partikelmaterial dem Trichterauslass (20) zuzuführen, wobei
der mindestens eine Trichterauslass (20) an einer Eingangsöffnung ein Sieb (40), vorzugsweise ein zylindrisches Rohrsieb, aufweist.

2. Die trichterförmige Fördervorrichtung (1) gemäß Patentanspruch 1, in der die mindestens eine geneigte Zufuhrebene (30; 32) direkt an dem mindestens einen Trichterauslass (20) oder über einen Abfuhrspalt (34) beabstandet zum Trichterauslass(20) endet.

3. Die trichterförmige Fördervorrichtung (1) gemäß Patentanspruch 2, die mindestens eine Abfuhrebene (36) zu einem zweiten Trichterauslass (22) aufweist, die mit einem Abfuhrspalt (34) in Verbindung steht,wobei der erste (20) und der zweite Trichterauslass (22) in einer Förderrichtung (R_{F}) der Fördervorrichtung (1) hintereinander in Schwerkraftrichtung unterhalb der siebartigen Förderfläche (10) angeordnet sind.

4. Die trichterförmige Fördervorrichtung (1) gemäß einem der vorhergehenden Patentansprüche, in der mit dem Schwingungsantrieb (S) die Fördervorrichtung (1), vorzugsweise zumindest die siebartige Förderfläche (10) und mindestens ein Trichterauslass (20; 22), in einem Frequenzbereich von 100-250 Hz, insbesondere 130-190 Hz, in Schwingungen versetzbar ist.

5. Die trichterförmige Fördervorrichtung (1) gemäß einem der vorhergehenden Patentansprüche, in der der mindestens eine Trichterauslass (20; 22) mit einer Absaugvorrichtung verbindbar ist, um im Vergleich zur Umgebung der Fördervorrichtung (1) einen Unterdruck in dem mindestens einen Trichterauslass (20; 22) zu erzeugen.

6. Die trichterförmige Fördervorrichtung (1) gemäß Patentanspruch 5, in der der erste Trichterauslass (20) mit einer ersten Absaugvorrichtung und ein zweiter Trichterauslass (22) mit einer zweiten Absaugvorrichtung verbunden oder verbindbar ist.

7. Ein Förder-Trenn-Verfahren für eine Bauteil-Partikelmaterial-Mischung eines additiven Herstellungsverfahrens, in Kombination mit der trichterförmigen Fördervorrichtung (1) gemäß Patentanspruch 1, mit dem Bauteile und loses Partikelmaterial der Bauteil-Partikelmaterial-Mischung förderbar und zumindest teilweise voneinander trennbar sind, wobei das Förder-Trenn-Verfahren die folgenden Schritte aufweist:
a. Fördern (S1) der Bauteil-Partikelmaterial-Mischung schwingungsgetrieben entlang einer Förderstrecke mit einer siebartigen Förderfläche (10),
b. zumindest teilweises Trennen (S2) von Bauteilen und losen Partikelmaterials der Bauteil-Partikelmaterial-Mischung während des Förderns (S1) entlang der siebartigen Förderfläche (10), wobei das lose Partikelmaterial schwerkraftgetrieben durch die siebartige Förderfläche (10) fällt,
c. Abgeben (S3) der Bauteile an einem Förderauslass (7) der Förderstrecke sowie
d. Abgeben des losen Partikelmaterials von der Fördervorrichtung über mindestens einen Trichterauslass, der bezogen auf die Schwerkraft unterhalb der siebartigen Förderfläche angeordnet ist, und
e. Sieben (S4) des losen Partikelmaterials zumindest in einem ersten Trichterauslass (20) durch ein Sieb (40), insbesondere ein Rohrsieb, welches am Eingang des Trichterauslasses (20) angeordnet ist.

8. Das Förder-Trenn-Verfahren gemäß Patentanspruch 7, welches den weiteren Schritt aufweist:
Erzeugen einer Schwingung zumindest in der siebartigen Förderfläche (10)und in dem mindestens einen Trichterauslass (20; 22), um den Bauteil- und den Materialtransport zu unterstützen.

9. Das Förder-Trenn-Verfahren gemäß einem der vorhergehenden Patentansprüche 7 bis 8 mit dem weiteren Schritt:
Erzeugen eines Unterdrucks an dem mindestens einen Trichterauslass (20; 22), um die Abfuhr des losen Partikelmaterials zu unterstützen.

10. Das Förder-Trenn-Verfahren gemäß Patentanspruch 9, wobei der Unterdruck in Bezug auf den Umgebungsdruck der Fördervorrichtung (1) in einem Bereich von 50-200 mbar liegt.

11. Das Förder-Trenn-Verfahren gemäß Patentanspruch 7 mit dem weiteren Schritt:
Abgeben (S6) des losen Partikelmaterials über einen zweiten Trichterauslass (22), der im Vergleich zum ersten Trichterauslass (20) kein Sieb oder ein Sieb anderer Maschengröße aufweist, wobei der erste (20) und der zweite Trichterauslass (22) in einer Förderrichtung (R_{F}) der Fördervorrichtung (1) hintereinander in Schwerkraftrichtung unterhalb der siebartigen Förderfläche (10) angeordnet sind.

12. Das Förder-Trenn-Verfahren gemäß einem der vorhergehenden Patentansprüche 7 bis 11 mit dem weiteren Schritt:
Sammeln (S7) des losen Partikelmaterials in mindestens einem Materialtank (50; 52),
Mischen (S8) des losen Partikelmaterials mit unverarbeitetem Partikelmaterial und danach
Zuführen (S9) der Materialmischung aus losem Partikelmaterial und unverarbeitetem Partikelmaterial einem additiven Herstellungsverfahren.

13. Das Förder-Trenn-Verfahren gemäß einem der vorhergehenden Patentansprüche 7 bis 12 mit dem weiteren Schritt:
erneutes Zuführen der entpulverten Bauteile in die Fördervorrichtung (1) und erneutes Starten der Schritte a bis d aus Patentanspruch 8.

14. Ein Entpackungs-Kreislauf-System zum Entpacken und Entstapeln von Bauteilen eines Pulverkuchens aus einem additiven Herstellungsverfahren, das die folgenden Merkmale aufweist:
eine trichterförmige Fördervorrichtung (1) gemäß einem der vorhergehenden Patentansprüche 1 bis 6, in die ein Pulverkuchen eines Baubehälters ausleerbar ist,
ein Abfuhrband (90) in einer Förderrichtung (R_{F}) anschließend an die Fördervorrichtung (1) und benachbart zum Förderauslass (7), mit und auf dem die Bauteile förderbar und inspizierbar sind, um einen Entpulverungszustand der Bauteile zu bestimmen,
ein Rückführungsband (94), mit dem Bauteile vom Abfuhrband (90), vorzugsweise mit einer Weiche, zurück in die trichterförmige Fördervorrichtung (1) bewegbar sind, um ein erneutes Entpulvern der Bauteile zu starten.

## Claims

1. A funnel-shaped conveyor device (1) with which components and loose particle material of a component particle material mixture of an additive production method are destackable, transportable and separable, wherein the conveyor device (1) includes:
a sieve-like conveyor surface (10) extending in the conveyor device (1) between a conveyor inlet (5) and a conveyor outlet (7) of the conveyor device (1) and being adapted for transporting the component particle material mixture in a vibration driven manner and separating it into components and loose particle material,
a vibration drive (S) with which the conveyor device (1) may be set into vibrations, and
at least one funnel outlet (20) arranged between the conveyor inlet (5) and the conveyor outlet (7) and in gravity direction below the sieve-like conveyor surface (10) as well as
at least one delivery plane (30; 32) inclined in the direction of the funnel outlet (20), which is arranged in gravity direction below the conveyor surface (10) in order to feed loose particle material to the funnel outlet (20), wherein
the at least one funnel outlet (20) includes a sieve (40), preferably a cylindrical tube sieve, at an entry opening.

2. The funnel-shaped conveyor device (1) according to claim 1, in which the at least one inclined delivery plane (30; 32) ends directly at the at least one funnel outlet (20) or by means of a discharge gap (34) at a distance to the funnel outlet (20).

3. The funnel-shaped conveyor device (1) according to claim 2, having at least one discharge plane (36) to a second funnel outlet (22), the discharge plane (36) being connected to a discharge gap (34), wherein the first (20) and the second funnel outlet (22) are arranged in a conveyor direction (R_{F}) of the conveyor device (1) one after another in gravity direction below the sieve-like conveyor surface (10).

4. The funnel-shaped conveyor device (1) according to one of the preceding claims, in which with the vibration drive (S), the conveyor device (1), preferably at least the sieve-like conveyor surface (10) and at least one funnel outlet (20; 22), may be set into vibrations in a frequency range from 100-250 Hz, in particular 130-190 Hz.

5. The funnel-shaped conveyor device (1) according to one of the preceding claims, in which the at least one funnel outlet (20; 22) is connectable with a suction device so as to generate a negative pressure in the at least one funnel outlet (20; 22) compared to the surrounding of the conveyor device (1).

6. The funnel-shaped conveyor device (1) according to claim 5, in which the first funnel outlet (20) is connected or connectable to a first suction device and a second funnel outlet (22) to a second suction device.

7. A method of conveying and separating a component particle material mixture of an additive production method, in combination with the funnel shaped conveyor device (1) according to claim 1, with which components and loose particle material of the component particle material mixture may be supplied and at least partially be separated from each other, wherein the method of conveying and separating comprises the following steps:
a. conveying (S 1) the component particle material mixture in a vibration driven manner along a conveyor line with a sieve-like conveyor surface (10),
b. at least partially separating (S2) of components and loose particle material of the component particle material mixture during the conveying (S1) along the sieve-like conveyor surface (10), wherein the loose particle material falls through the sieve-like conveyor surface (10) in a gravity-driven manner,
c. dispensing (S3) the components to a conveyor outlet (7) of the conveyor line as well as
d. dispensing the loose particle material from the conveyor device via at least one funnel outlet, which, with respect to gravity, is arranged below the sieve-like conveyor surface, and
e. sieving (S4) the loose particle material at least in one first funnel outlet (20) through a sieve (40), in particular a tube sieve that is arranged at the entry of the funnel outlet (20).

8. The method of conveying and separating according to claim 7, including the further step:
generating a vibration at least in the sieve-like conveyor surface (10) and in the at least one funnel outlet (20; 22) in order to support the component and the material transport.

9. The method of conveying and separating according to one of the preceding claims 7 to 8 with the further step:
generating a negative pressure at the at least one funnel outlet (20; 22) in order to support the discharging of the loose particle material.

10. The method of conveying and separating according to claim 9, wherein the negative pressure with respect to the ambient pressure of the conveyor device (1) lies in a range from 50-200 mbar.

11. The method of conveying and separating according to claim 7, with the further step:
dispensing (S6) the loose particle material via a second funnel outlet (22), which, in comparison to the first funnel outlet (20), includes no sieve or a sieve of another mesh size, wherein the first (20) and the second funnel outlet (22) are arranged in a conveyor direction (R_{F}) of the conveyor device (1) one after the other in gravity direction below the sieve-like conveyor surface (10).

12. The method of conveying and separating according to one of the preceding claims 7 to 11 with the further step:
collecting (S7) the loose particle material in at least one material tank (50; 52),
mixing (S8) the loose particle material with unprocessed particle material and after that
supplying (S9) the material mixture out of loose particle material and unprocessed particle material to an additive production method.

13. The method of conveying and separating according to one of the preceding claims 7 to 12 with the further step:
again delivering the depowdered components into the conveyor device (1) and again starting the steps a to d of claim 8.

14. An unpacking circulatory system for unpacking and destacking components of a powder cake from an additive production method including the following features:
a funnel-shaped conveyor device (1) according to one of the preceding claims 1 to 6, into which a powder cake of a construction container may be emptied,
a discharge belt (90) in a conveyor direction (R_{F}) following the conveyor device (1) and adjacent to the conveyor outlet (7), with which and on which the components may be delivered and inspected in order to determine the state of depowdering of the components,
a return belt (94) with which components from the discharge belt (90) are movable back into the funnel-shaped conveyor device (1), preferably by means of a switch, in order to start a new depowdering of the components.

## Revendications

1. Dispositif de transport en forme d'entonnoir (1) permettant de désempiler, de transporter et de séparer des composants et une matière particulaire en vrac d'un mélange de composants et de matière particulaire d'un procédé de fabrication additif, dans lequel le dispositif de transport (1) présente :
une surface de transport du genre tamis (10), laquelle s'étend dans le dispositif de transport (1) entre une entrée de transport (5) et une sortie de transport (7) du dispositif de transport (1) et est adaptée pour transporter le mélange de composants et de matière particulaire de façon entraînée par oscillation et pour séparer celui-ci en composants et matière particulaire en vrac,
un entraînement oscillant (S) permettant de faire osciller le dispositif de transport (1), et
au moins une sortie d'entonnoir (20) disposée entre l'entrée de transport (5) et la sortie de transport (7) et sous la surface de transport du genre tamis (10) dans la direction de la gravité, ainsi que
au moins un plan d'alimentation (30 ; 32) incliné dans la direction de la sortie d'entonnoir (20), lequel est disposé sous la surface de transport du genre tamis (10) dans la direction de la gravité, pour alimenter la sortie d'entonnoir (20) en matière particulaire, dans lequel
l'au moins une sortie d'entonnoir (20) présente un tamis (40) au niveau d'une ouverture d'introduction, de préférence un tamis tubulaire cylindrique.

2. Dispositif de transport en forme d'entonnoir (1) selon la revendication 1, dans lequel l'au moins un plan d'alimentation incliné (30 ; 32) se termine directement au niveau de l'au moins une sortie d'entonnoir (20) ou de façon espacée par une fente d'évacuation (34) par rapport à la sortie d'entonnoir (20).

3. Dispositif de transport en forme d'entonnoir (1) selon la revendication 2, présentant au moins un plan d'évacuation (36) vers une deuxième sortie d'entonnoir (22), laquelle est reliée à une fente d'évacuation (34), dans lequel la première (20) et la deuxième sortie d'entonnoir (22) sont disposées l'une après l'autre dans une direction de transport (R_{F}) du dispositif de transport (1), sous la surface de transport du genre tamis (10) dans la direction de la gravité.

4. Dispositif de transport en forme d'entonnoir (1) selon l'une des revendications précédentes, dans lequel l'entraînement oscillant (S) permet de faire osciller le dispositif de transport (1), de préférence au moins la surface de transport du genre tamis (10) et au moins une sortie d'entonnoir (20 ; 22), dans une plage de fréquence de 100-250 Hz, en particulier de 130-190 Hz.

5. Dispositif de transport en forme d'entonnoir (1) selon l'une des revendications précédentes, dans lequel l'au moins une sortie d'entonnoir (20 ; 22) peut être reliée à un dispositif d'aspiration, pour produire une dépression dans l'au moins une sortie d'entonnoir (20 ; 22) en comparaison avec l'environnement du dispositif de transport (1).

6. Dispositif de transport en forme d'entonnoir (1) selon la revendication 5, dans lequel la première sortie d'entonnoir (20) est reliée ou peut être reliée à un premier dispositif d'aspiration et une deuxième sortie d'entonnoir (22) est reliée ou peut être reliée à un deuxième dispositif d'aspiration.

7. Procédé de transport et de séparation pour un mélange de composants et de matière particulaire d'un procédé de fabrication additif, en combinaison avec le dispositif de transport en forme d'entonnoir (1) selon la revendication 1, destiné à transporter et à séparer au moins partiellement des composants et une matière particulaire en vrac du mélange de composants et de matière particulaire, dans lequel le procédé de transport et de séparation présente les étapes suivantes :
a. transport (S1) du mélange de composants et de matière particulaire de façon entraînée par oscillation le long d'un trajet de transport comprenant une surface de transport du genre tamis (10),
b. séparation au moins partielle (S2) de composants et d'une matière particulaire en vrac du mélange de composants et de matière particulaire pendant le transport (S1) le long de la surface de transport du genre tamis (10), la matière particulaire en vrac tombant à travers la surface de transport du genre tamis (10) de façon entraînée par la force de gravité,
c. distribution (S3) des composants à une sortie de transport (7) du trajet de transport ainsi que
d. distribution de la matière particulaire en vrac à partir du dispositif de transport par le biais d'au moins une sortie d'entonnoir, laquelle est disposée sous la surface de transport du genre tamis par rapport à la force de gravité, et
e. tamisage (S4) de la matière particulaire en vrac au moins dans une première sortie d'entonnoir (20) par un tamis (40), en particulier un tamis tubulaire, lequel est disposé à l'entrée de la sortie d'entonnoir (20).

8. Procédé de transport et de séparation selon la revendication 7, présentant l'étape supplémentaire suivante :
production d'une oscillation au moins dans la surface de transport du genre tamis (10) et dans l'au moins une sortie d'entonnoir (20 ; 22), afin de favoriser le transport de composants et de matière.

9. Procédé de transport et de séparation selon l'une des revendications 7 à 8, comprenant l'étape supplémentaire suivante :
production d'une dépression au niveau de l'au moins une sortie d'entonnoir (20 ; 22), pour favoriser l'évacuation de la matière particulaire en vrac.

10. Procédé de transport et de séparation selon la revendication 9, dans lequel la dépression est comprise dans une plage de 50-200 mbar par rapport à la pression environnante du dispositif de transport (1).

11. Procédé de transport et de séparation selon la revendication 7, comprenant l'étape supplémentaire suivante :
distribution (S6) de la matière particulaire en vrac par le biais d'une deuxième sortie d'entonnoir (22), laquelle ne présente pas de tamis ou un tamis avec une autre taille de mailles en comparaison avec la première sortie d'entonnoir (20), dans lequel la première (20) et la deuxième sortie d'entonnoir (22) sont disposées l'une après l'autre dans une direction de transport (R_{F}) du dispositif de transport (1), sous la surface de transport du genre tamis (10) dans la direction de la gravité.

12. Procédé de transport et de séparation selon l'une des revendications précédentes 7 à 11, comprenant l'étape supplémentaire suivante :
collecte (S7) de la matière particulaire en vrac dans au moins un réservoir de matière (50 ; 52),
mélange (S8) de la matière particulaire en vrac avec de la matière particulaire non traitée, et puis
alimentation (S9) du mélange de matière constitué de matière particulaire en vrac et de matière particulaire non traitée vers un procédé de fabrication additif.

13. Procédé de transport et de séparation selon l'une des revendications précédentes 7 à 12, comprenant l'étape supplémentaire suivante :
nouvelle alimentation des composants dépoudrés vers le dispositif de transport (1) et nouvelle exécution des étapes a à d selon la revendication 8.

14. Système de circuit de déballage pour le déballage et le désempilage de composants d'un pain de poudre provenant d'un procédé de fabrication additif, lequel présente les caractéristiques suivantes :
un dispositif de transport en forme d'entonnoir (1) selon l'une des revendications précédentes 1 à 6, dans lequel un pain de poudre d'un récipient peut être vidé,
une bande d'évacuation (90) dans une direction de transport (R_{F}) à la suite du dispositif de transport (1) et adjacente à la sortie de transport (7), avec laquelle et sur laquelle les composants peuvent être transportés et inspectés, afin de déterminer un état de dépoudrage des composants,
une bande de renvoi (94) permettant de redéplacer les composants à partir de la bande d'évacuation (90), de préférence à l'aide d'un déviateur, vers le dispositif de transport en forme d'entonnoir (1), afin de démarrer un nouveau dépoudrage des composants.
